# EUROPEAN PATENT APPLICATION

(11) **EP 4 648 530 A1**
(43) Date of publication of application: **12.11.2025**
(21) Application number: 23905874.6
(22) Date of filing: 18.12.2023
(51) Int. Cl.: H04W 74/08

(54) **METHOD AND APPARATUS USED IN NODE FOR WIRELESS COMMUNICATION**

(30) Priority: 23.12.2022 CN 202211669158
(71) Applicant: SHANGHAI LANGBO COMMUNICATION TECHNOLOGY COMPANY LIMITED, Shanghai 200240 (CN)
(72) Inventor: LIU, Jin, Shanghai 201206 (CN); ZHANG, Xiaobo, Shanghai 201206 (CN)
(74) Representative: Gunzelmann, Rainer
(86) International application number: PCT/CN2023/139430
(87) International publication number: WO 2024/131710

(57) **Abstract**

Disclosed in the present application are a method and apparatus used in a node for wireless communication. The method comprises: a first node sending K first-type sequences on K random access occasions by respectively using K spatial-domain filters; receiving first signaling and a first signal in a first time window, wherein the first signaling is used for scheduling the first signal, and at least one of the first signaling and the first signal is used for determining a first identifier; and sending a second signal by using a second spatial-domain filter, wherein the first signal is used for indicating a time-frequency resource occupied by the second signal, the first identifier is used for indicating a first random access occasion, which is one of the K random access occasions, the first random access occasion corresponds to a first spatial-domain filter, which is one of the K spatial-domain filters, and the first spatial-domain filter is used for determining the second spatial-domain filter. The present application saves on resource overheads and signaling overheads.

## Description

### Technical Field

The present application relates to a transmission method and apparatus in a wireless communication system, and particularly to a transmission scheme and apparatus for random access in wireless communication.

### Background Art

Coverage is one of the key factors that operators consider when commercializing cellular communication networks, as it directly affects service quality as well as capital expenditures (CAPEX) and operational expenditures (OPEX). In most scenarios of actual deployment, uplink (UL) performance may be a bottleneck, while in some emerging vertical use cases, uplink traffic is large, such as video upload. In the Rel-17 "NR (New Radio) Coverage Enhancement" work item (WI), the NR coverage for a PUSCH (Physical uplink shared channel), a PUCCH (Physical uplink control channel), and an Msg3 (Message 3) is extended and enhanced. However, the improvement in the coverage of a PRACH (Physical random access channel) has not yet been addressed. Since PRACH transmission is very important in many processes, such as initial access and beam failure recovery, Rel-18 establishes the "Further NR coverage enhancements" work item to further enhance the uplink coverage of the PRACH.

### Summary of the Invention

In order to improve PRACH coverage performance, one most direct and effective method is to use multiple PRACH transmission. When the same uplink transmission beam or the same uplink spatial filter is applied to repeatedly send a plurality of PRACHs, a system may obtain an SNR (Signal-to-Noise Ratio) combining gain, thereby improving the PRACH coverage performance; when different uplink transmission beams or different spatial filters are applied to send the plurality of PRACHs, the system may obtain an uplink beam diversity gain, and more accurate beam direction guidance may also be provided for transmission of the Msg3 or subsequent uplink transmission by using the different uplink transmission beams. In existing random access procedures, for one random access attempt (RACH Attempt), an RAPID (Random Access Preamble Identifier) in an Msg2 (Message 2) may be used for distinguishing the use of different preambles. However, when UE (User Equipment) uses the same preamble to perform repeated sending on a plurality of ROs (RACH Occasions), existing random access signalings and signals cannot provide an indication of a beam direction.

In view of the above problems, the present application discloses a method for an uplink beam indication in a random access procedure, so that the UE may apply an indicated uplink beam or uplink spatial filter to perform uplink transmission, and can effectively save on signaling overheads and reduce an impact on standardization work. It should be noted that in the absence of conflict, embodiments and the features in the embodiments in the user equipment of the present application may be applied to a base station, and vice versa. In the absence of conflict, the embodiments and the features in the embodiments of the present application may be arbitrarily combined with each other. Further, although an original intention of the present application is for random access, the present application can also be used for beam failure recovery.

Further, although the original intention of the present application is for a uplink, the present application can also be used for a sidelink. Further, although the original intention of the present application is for single-carrier communication, the present application can also be used for multi-carrier communication. Further, although the original intention of the present application is for single-antenna communication, the present application can also be used for multi-antenna communication. Further, although the original intention of the present application is for a terminal and base station scenario, the present application is also applicable to a vehicle-to-everything (V2X) scenario, a terminal and relay communication scenario, and a relay and base station communication scenario, to achieve similar technical effects in the terminal and base station scenario. In addition, using a unified solution for different scenarios (including but not limited to the V2X scenario and the terminal and base station communication scenario) also helps reduce hardware complexity and costs.

It should be noted that an interpretation of terminologies in the present application refers to definitions in TS36 series, TS37 series, and TS38 series of 3GPP specification protocols, but can also refer to definitions in IEEE (Institute of Electrical and Electronics Engineers) specification protocols.

The present application discloses a method used in a first node for wireless communication, characterized by comprising:
sending K first-type sequences on K random access occasions by respectively using K spatial filters, wherein K is a positive integer greater than 1;
receiving a first signaling and a first signal in a first time window, wherein the first signaling is used for scheduling the first signal, and at least one of the first signaling or the first signal is used for determining a first identifier; and
sending a second signal by using a second spatial filter,
wherein the first signal carries a second identifier, and the second identifier is used for identifying at least one of the K first-type sequences; the first signal is used for indicating a time-frequency resource occupied by the second signal; the first identifier is used for indicating a first random access occasion, which is one of the K random access occasions; the first random access occasion corresponds to a first spatial filter, which is one of the K spatial filters; and the first spatial filter is used for determining the second spatial filter.

As one embodiment, a problem to be solved by the present application is: in a multiple PRACH transmission scheme, when a plurality of PRACHs send random access preambles by using a plurality of different spatial filters, how to effectively determine the number of transmission and the transmission beam of an Msg3.

As one embodiment, a method of the present application is: establishing an association between the plurality of PRACHs and the plurality of spatial filters.

As one embodiment, the method of the present application is: establishing the association between at least one of the first signaling or the first signal and the first random access occasion.

As one embodiment, the method of the present application is: establishing the association between the first random access occasion and the first spatial filter.

As one embodiment, the method of the present application is: establishing a relationship between the first spatial filter and the second spatial filter.

As one embodiment, a characteristic of the above method is that at least one of the first signaling or the first signal is used for indicating the first random access occasion, and the first random access occasion is used for determining a spatial filter of the second signal.

As one embodiment, an advantage of the above method is that under a condition of no additional signaling overheads or lower signaling overheads, a number of repeated transmission of the Msg3 is reduced, and reception quality of the Msg3 is increased.

According to one aspect of the present application, the above method is characterized in that a first symbol index, a first slot index, and a first frequency domain index are related to the first random access occasion; the first symbol index, the first slot index, and the first frequency domain index are all used for generating the first identifier; and the first identifier is used for scrambling the first signaling.

According to one aspect of the present application, the above method is characterized in that the first identifier is used for indicating the first random access occasion from the K random access occasions; and the first signaling comprises a plurality of fields, and the first identifier is one of the plurality of fields comprised in the first signaling.

According to one aspect of the present application, the above method is characterized in that the first signal comprises a plurality of fields, and the first identifier is one of the plurality of fields comprised in the first signal.

According to one aspect of the present application, the above method is characterized by comprising:
receiving a first synchronization signal/physical broadcast channel block,
wherein a measurement result for the first synchronization signal/physical broadcast channel block is used for determining the K random access occasions, K0 random access occasions are associated with the first synchronization signal/physical broadcast channel block, the K0 random access occasions comprise the K random access occasions, and K0 is a positive integer not less than K.

According to one aspect of the present application, the above method is characterized by comprising:
receiving first configuration information,
wherein the first configuration information is used for determining the association of a plurality of candidate synchronization signal/physical broadcast channel blocks with a plurality of random access occasions; the first synchronization signal/physical broadcast channel block is one of the plurality of candidate synchronization signal/physical broadcast channel blocks; and a plurality of measurement results respectively for the plurality of candidate synchronization signal/physical broadcast channel blocks are used for determining the first synchronization signal/physical broadcast channel block from the plurality of candidate synchronization signal/physical broadcast channel blocks.

According to one aspect of the present application, the above method is characterized in that the first node is user equipment.

According to one aspect of the present application, the above method is characterized in that the first node is a relay node.

The present application discloses a method used in a second node for wireless communication, characterized by comprising:
receiving at least one first-type sequence on K0 random access occasions, respectively, wherein K0 is a positive integer greater than 1;
sending a first signaling and a first signal in a first time window, wherein the first signaling is used for scheduling the first signal, and at least one of the first signaling or the first signal is used for indicating a first identifier; and
receiving a second signal,
wherein the first signal is used for carrying a second identifier, and the second identifier is used for identifying the at least one first-type sequence; the first signal is used for indicating a time-frequency resource occupied by the second signal; the first identifier is used for indicating a first random access occasion, which is one of the K0 random access occasions; the at least one first-type sequence is transmitted by respectively using at least one spatial filter, and the first random access occasion corresponds to a first spatial filter, which is one of the at least one spatial filter; and the first spatial filter is used for determining a second spatial filter, and the second signal is transmitted by using the second spatial filter.

According to one aspect of the present application, the above method is characterized in that a first symbol index, a first slot index, and a first frequency domain index are related to the first random access occasion; the first symbol index, the first slot index, and the first frequency domain index are all used for generating the first identifier; and the first identifier is used for scrambling the first signaling.

According to one aspect of the present application, the above method is characterized in that the first identifier is used for indicating the first random access occasion from the K0 random access occasions; and the first signaling comprises a plurality of fields, and the first identifier is one of the plurality of fields comprised in the first signaling.

According to one aspect of the present application, the above method is characterized in that the first signal comprises a plurality of fields, and the first identifier is one of the plurality of fields comprised in the first signal.

According to one aspect of the present application, the above method is characterized by comprising:
sending a first synchronization signal/physical broadcast channel block,
wherein the K0 random access occasions are associated with the first synchronization signal/physical broadcast channel block.

According to one aspect of the present application, the above method is characterized by comprising:
receiving first configuration information,
wherein the first configuration information is used for determining an association of a plurality of candidate synchronization signal/physical broadcast channel blocks with a plurality of random access occasions; the first synchronization signal/physical broadcast channel block is one of the plurality of candidate synchronization signal/physical broadcast channel blocks; and a plurality of measurement results respectively for the plurality of candidate synchronization signal/physical broadcast channel blocks are used for determining the first synchronization signal/physical broadcast channel block from the plurality of candidate synchronization signal/physical broadcast channel blocks.

According to one aspect of the present application, the above method is characterized in that the second node is a base station.

According to one aspect of the present application, the above method is characterized in that the second node is a relay node.

According to one aspect of the present application, the above method is characterized in that the second node is user equipment.

The present application discloses a first node device for wireless communication, characterized by comprising:
a first transmitter, sending K first-type sequences on K random access occasions by respectively using K spatial filters, wherein K is a positive integer greater than 1;
a first receiver, receiving a first signaling and a first signal in a first time window, wherein the first signaling is used for scheduling the first signal, and at least one of the first signaling or the first signal is used for determining a first identifier; and
the first transmitter, sending a second signal by using a second spatial filter,
wherein the first signal carries a second identifier, and the second identifier is used for identifying at least one of the K first-type sequences; the first signal is used for indicating a time-frequency resource occupied by the second signal; the first identifier is used for indicating a first random access occasion, which is one of the K random access occasions; the first random access occasion corresponds to a first spatial filter, which is one of the K spatial filters; and the first spatial filter is used for determining the second spatial filter.

The present application discloses a second node device for wireless communication, characterized by comprising:
a second receiver, receiving at least one first-type sequence on K0 random access occasions, respectively, wherein K0 is a positive integer greater than 1;
a second transmitter, sending a first signaling and a first signal in a first time window, wherein the first signaling is used for scheduling the first signal, and at least one of the first signaling or the first signal is used for indicating a first identifier; and
the second receiver, receiving a second signal,
wherein the first signal is used for carrying a second identifier, and the second identifier is used for identifying the at least one first-type sequence; the first signal is used for indicating a time-frequency resource occupied by the second signal; the first identifier is used for indicating a first random access occasion, which is one of the K0 random access occasions; the at least one first-type sequence is transmitted by respectively using at least one spatial filter, and the first random access occasion corresponds to a first spatial filter, which is one of the at least one spatial filter; and the first spatial filter is used for determining a second spatial filter, and the second signal is transmitted by using the second spatial filter.

### Brief Description of the Drawings

By reading and referring to the detailed descriptions of the non-limiting embodiments in the following drawings, other features, purposes, and advantages of the present application will become more apparent:
FIG. 1 shows a processing flowchart of a first node according to one embodiment of the present application;
FIG. 2 shows a schematic diagram of a network architecture according to one embodiment of the present application;
FIG. 3 shows a schematic diagram of a radio protocol architecture for a user plane and a control plane according to one embodiment of the present application;
FIG. 4 shows a schematic diagram of a first communication device and a second communication device according to one embodiment of the present application;
FIG. 5 shows a flowchart of wireless signal transmission according to one embodiment of the present application;
FIG. 6 shows a schematic diagram of a relationship between a first synchronization signal/physical broadcast channel block and K random access occasions according to one embodiment of the present application;
FIG. 7 shows a schematic diagram of relationships between first signaling and a first random access occasion and between a first spatial filter and a second spatial filter according to one embodiment of the present application;
FIG. 8 shows a structural block diagram of a processing apparatus used in a first node device according to one embodiment of the present application; and
FIG. 9 shows a structural block diagram of a processing apparatus used in a second node device according to one embodiment of the present application.

### Detailed Description of Embodiments

The technical solutions of the present application will be further described in detail below in conjunction with the drawings. It should be noted that in the absence of conflict, embodiments and the features in the embodiments of the present application may be arbitrarily combined with each other.

### Embodiment 1

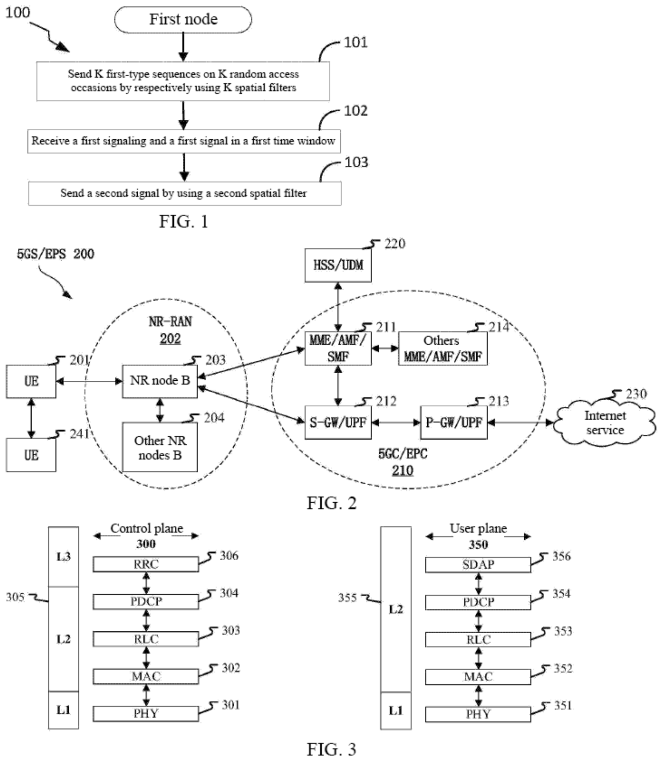

Embodiment 1 shows a processing flowchart of a first node according to one embodiment of the present application, as shown in FIG. 1. In FIG. 1, each box represents one step.

In Embodiment 1, the first node in the present application first executes step 101: sending K first-type sequences on K random access occasions by respectively using K spatial filters, wherein K is a positive integer greater than 1; then executes step 102: receiving a first signaling and a first signal in a first time window, wherein the first signaling is used for scheduling the first signal, and at least one of the first signaling or the first signal is used for determining a first identifier; and finally executes step 103: sending a second signal by using a second spatial filter, wherein the first signal carries a second identifier, and the second identifier is used for identifying at least one of the K first-type sequences; the first signal is used for indicating a time-frequency resource occupied by the second signal; the first identifier is used for indicating a first random access occasion, which is one of the K random access occasions; the first random access occasion corresponds to a first spatial filter, which is one of the K spatial filters; and the first spatial filter is used for determining the second spatial filter.

As one embodiment, any one of the K first-type sequences is a pseudo-random sequence.

As one embodiment, any one of the K first-type sequences is a gold sequence.

As one embodiment, any one of the K first-type sequences is an M sequence.

As one embodiment, any one of the K first-type sequences is a ZC (Zadoff-Chu) sequence.

As one embodiment, any one of the K first-type sequences is a random access preamble.

As one embodiment, any one of the K first-type sequences is a PRACH preamble (Physical Random Access Channel Preamble).

As one embodiment, any one of the K first-type sequences is a random access preamble in a Message 1 (Msg1) of a Type-1 L1 random access procedure.

As one embodiment, any one of the K first-type sequences is the PRACH preamble in the Msg1 of the Type-1 L1 random access procedure.

As one embodiment, any one of the K first-type sequences is the random access preamble of a 4-step random access procedure.

As one embodiment, any one of the K first-type sequences is the PRACH preamble of the 4-step random access procedure.

As one embodiment, any one of the K first-type sequences is the random access preamble in a Message A (MsgA) of a Type-2 L1 random access procedure.

As one embodiment, any one of the K first-type sequences is the PRACH preamble in the MsgA of the Type-2 L1 random access procedure.

As one embodiment, any one of the K first-type sequences is the random access preamble of a 2-step random access procedure.

As one embodiment, any one of the K first-type sequences is the PRACH preamble of the 2-step random access procedure.

As one embodiment, any one of the K first-type sequences belongs to the Msg1 of the Type-1 L1 random access procedure.

As one embodiment, any one of the K first-type sequences belongs to the MsgA of the Type-2 L1 random access procedure.

As one embodiment, the K first-type sequences are the same.

As one embodiment, logical root sequences of any two of the K first-type sequences are the same.

As one embodiment, cyclic shifts of any two of the K first-type sequences are the same.

As one embodiment, logical root sequences and cyclic shifts of any two of the K first-type sequences are the same.

As one embodiment, any two of the K first-type sequences are different.

As one embodiment, logical root sequences of any two of the K first-type sequences are different.

As one embodiment, cyclic shifts of any two of the K first-type sequences are different.

As one embodiment, logical root sequences or cyclic shifts of any two of the K first-type sequences are different.

As one embodiment, logical root sequences and cyclic shifts of any two of the K first-type sequences are different.

As one embodiment, at least two of the K first-type sequences are the same.

As one embodiment, logical root sequences and cyclic shifts of at least two of the K first-type sequences are the same.

As one embodiment, K is a positive integer greater than 1.

As one embodiment, K is a positive integer not greater than 64.

As one embodiment, K is a positive integer in {2,4,8}.

As one embodiment, K is equal to 2.

As one embodiment, K is equal to 4.

As one embodiment, the K random access occasions are K physical random access channel occasions (PRACH occasions), respectively.

As one embodiment, the K random access occasions are K random access channel occasions (RACH occasions, ROs), respectively.

As one embodiment, any one of the K random access occasions occupies a plurality of resource elements (REs).

As one embodiment, any RE occupied by any one of the K random access occasions occupies one symbol in a time domain and occupies one subcarrier in a frequency domain.

As one embodiment, any two of the K random access occasions are TDM (Time Division Multiplexing).

As one embodiment, the K random access occasions are TDM.

As one embodiment, the K random access occasions are orthogonal in the time domain.

As one embodiment, the K random access occasions occupy the same frequency domain resources.

As one embodiment, any two of the K random access occasions occupy the same frequency domain resources.

As one embodiment, at least two of the K random access occasions occupy the same frequency domain resources.

As one embodiment, frequency domain resources occupied by at least two of the K random access occasions overlap.

As one embodiment, at least two of the K random access occasions occupy different frequency domain resources.

As one embodiment, the first random access occasion is one of the K random access occasions.

As one embodiment, the K spatial filters correspond to K uplink beams (UL Beams), respectively.

As one embodiment, the K spatial filters are respectively used for forming the K uplink beams.

As one embodiment, the K spatial filters correspond to the K uplink transmission beams, respectively.

As one embodiment, the K spatial filters are respectively used for forming the K uplink transmission beams.

As one embodiment, the K spatial filters correspond to K transmission beams, respectively.

As one embodiment, the K spatial filters are respectively used for forming the K transmission beams.

As one embodiment, the K spatial filters correspond to K antenna ports, respectively.

As one embodiment, the K spatial filters all correspond to the same antenna port.

As one embodiment, the K spatial filters are different from each other.

As one embodiment, the K spatial filters are different.

As one embodiment, the K spatial filters are all the same.

As one embodiment, at least two of the K spatial filters are different.

As one embodiment, at least two of the K spatial filters are the same.

As one embodiment, "the K spatial filters are all the same" refers to: the K uplink beams corresponding to the K spatial filters respectively are the same.

As one embodiment, "the K spatial filters are all the same" refers to: the K uplink beams formed by respectively using the K spatial filters are the same.

As one embodiment, "the K spatial filters are all the same" refers to: the K transmission beams corresponding to the K spatial filters respectively are the same.

As one embodiment, "the K spatial filters are all the same" refers to: the K transmission beams formed by respectively using the K spatial filters are the same.

As one embodiment, "the K spatial filters are different" refers to: the K uplink beams corresponding to the K spatial filters respectively are different.

As one embodiment, "the K spatial filters are different" refers to: the K uplink beams formed by respectively using the K spatial filters are different.

As one embodiment, "the K spatial filters are different" refers to: the K transmission beams corresponding to the K spatial filters respectively are different.

As one embodiment, "the K spatial filters are different" refers to: the K transmission beams formed by respectively using the K spatial filters are different.

As one embodiment, the first spatial filter is one of the K spatial filters.

As one embodiment, the K random access occasions are in a one-to-one correspondence with the K spatial filters, respectively.

As one embodiment, the first random access occasion corresponds to the first spatial filter.

As one embodiment, "the K random access occasions are in a one-to-one correspondence with the K spatial filters, respectively" refers to: the K first-type sequences on the K random access occasions are sent by respectively using the K spatial filters.

As one embodiment, "the K random access occasions are in a one-to-one correspondence with the K spatial filters, respectively" refers to: any first-type sequence on any one of the K random access occasions is sent by the first node using corresponding one of the K spatial filters.

As one embodiment, "the first random access occasion corresponds to the first spatial filter" refers to: one first-type sequence on the first random access occasion is sent by using the first spatial filter.

As one embodiment, "the first random access occasion corresponds to the first spatial filter" refers to: any first-type sequence on the first random access occasion is sent by the first node using the first spatial filter.

As one embodiment, the first time window is a random access response window (RAR window).

As one embodiment, the first time window is controlled by a higher layer.

As one embodiment, the first node attempts to detect the first signaling in the first time window.

As one embodiment, the first time window comprises a plurality of slots.

As one embodiment, at least one of the K random access occasions is used for determining a start of the first time window.

As one embodiment, an initial random access occasion of the K random access occasions is used for determining the start of the first time window.

As one embodiment, the last random access occasion of the K random access occasions is used for determining the start of the first time window.

As one embodiment, a first reference random access occasion is one of the K random access occasions.

As one embodiment, the first reference random access occasion is the initial random access occasion of the K random access occasions.

As one embodiment, the first reference random access occasion is the last random access occasion of the K random access occasions.

As one embodiment, the start of the first time window is at least one symbol after the last symbol of the first reference random access occasion.

As one embodiment, the start of the first time window is at an initial symbol of an earliest CORESET (Control Resource Set) of the first signaling that the first node is configured to receive.

As one embodiment, the first signaling belongs to a Message 2 (Msg2) of a Type-1 L1 random access procedure.

As one embodiment, the Message 2 of the Type-1 L1 random access procedure comprises the first signaling.

As one embodiment, the first signaling is a PDCCH (Physical Downlink Control Channel) in the Message 2 of the Type-1 L1 random access procedure.

As one embodiment, the first signaling is DCI (Downlink Control Information) in the Message 2 of the Type-1 L1 random access procedure.

As one embodiment, the first signaling belongs to a Message B (MsgB) of a Type-2 L1 random access procedure.

As one embodiment, the Message B of the Type-2 L1 random access procedure comprises the first signaling.

As one embodiment, the first signaling is the PDCCH in the Message B of the Type-2 L1 random access procedure.

As one embodiment, the first signaling is the DCI in the Message B of the Type-2 L1 random access procedure.

As one embodiment, the first signaling is the DCI of an RAR (Random Access Response).

As one embodiment, the first signaling is a DCI format 1_0 (downlink control information format 1_0).

As one embodiment, the first signaling is transmitted on the PDCCH.

As one embodiment, the first signaling carries a CRC (Cyclic Redundancy Check) scrambled by an RA-RNTI (Random Access-Radio Network Temporary Identity).

As one embodiment, the first signaling carries the CRC scrambled by an MsgB-RNTI.

As one embodiment, the first signaling and the first signal both belong to the Message 2 of the Type-1 L1 random access procedure.

As one embodiment, the Message 2 of the Type-1 L1 random access procedure comprises the first signaling and the first signal.

As one embodiment, the first signal is a PDSCH (Physical Downlink Shared Channel) in the Message 2 of the Type-1 L1 random access procedure.

As one embodiment, the first signal is a TB (Transport Block) in the Message 2 of the Type-1 L1 random access procedure.

As one embodiment, the first signal is the RAR in the Message 2 of the Type-1 L1 random access procedure.

As one embodiment, the first signaling and the first signal both belong to the Message B of the Type-2 L1 random access procedure.

As one embodiment, the Message B of the Type-2 L1 random access procedure comprises the first signaling and the first signal.

As one embodiment, the first signal is the PDSCH in the Message B of the Type-2 L1 random access procedure.

As one embodiment, the first signal is the TB in the Message B of the Type-2 L1 random access procedure.

As one embodiment, the first signal is a fallbackRAR (fallback random access response) in the Message B of the Type-2 L1 random access procedure.

As one embodiment, the first signal comprises one TB.

As one embodiment, the first signal comprises one RAR.

As one embodiment, the first signal comprises one fallbackRAR.

As one embodiment, the first signal comprises all or part of one higher layer signaling.

As one embodiment, the first signal comprises all or part of one MAC (Medium Access Control) layer signaling.

As one embodiment, the first signal comprises one or more fields in an MAC CE (Control Element).

As one embodiment, the first signal comprises one MAC PDU (Protocol Data Unit).

As one embodiment, the first signal comprises one MAC subPDU (Medium Access Control-subProtocol Data Unit).

As one embodiment, the first signal comprises a plurality of MAC subPDUs.

As one embodiment, at least one of the plurality of MAC subPDUs comprised in the first signal comprises one MAC subheader (Medium Access Control-subheader).

As one embodiment, at least one of the MAC subPDUs comprised in the first signal comprises one MAC subheader and one MAC payload (Medium Access Control-payload).

As one embodiment, the MAC payload comprises an MAC RAR.

As one embodiment, the MAC payload comprises an MAC fallbackRAR.

As one embodiment, at least one of the plurality of MAC subPDUs comprised in the first signal comprises one MAC subheader and one MAC RAR.

As one embodiment, at least one of the plurality of MAC subPDUs comprised in the first signal comprises one MAC subheader and one MAC fallbackRAR.

As one embodiment, one of the plurality of MAC subPDUs comprised in the first signal comprises the MAC subheader that carries only a backoff indicator.

As one embodiment, the first signal is transmitted on the PDSCH.

As one embodiment, the first signaling and the first signal are the DCI and the RAR, respectively.

As one embodiment, the first signaling and the first signal are the DCI and the fallbackRAR, respectively.

As one embodiment, the first signaling and the first signal are transmitted on the PDCCH and the PDSCH, respectively.

As one embodiment, the first signaling is associated with the first signal.

As one embodiment, the first signaling is used for scheduling the first signal.

As one embodiment, the first signaling is used for indicating the time-frequency resource occupied by the first signal.

As one embodiment, the first signaling is used for indicating an MCS (Modulation and Coding Scheme) used by the first signal.

As one embodiment, the first signal comprises a TAC (Timing Advance Command).

As one embodiment, the first signal comprises one RAR UL grant (Random Access Response Uplink Grant).

As one embodiment, the first signal carries the second identifier.

As one embodiment, the first signal comprises the second identifier.

As one embodiment, one MAC subPDU comprised in the first signal comprises the second identifier.

As one embodiment, the MAC subheader in one MAC subPDU comprised in the first signal comprises the second identifier.

As one embodiment, the MAC payload in one MAC subPDU comprised in the first signal comprises the second identifier.

As one embodiment, the MAC RAR in one MAC subPDU comprised in the first signal comprises the second identifier.

As one embodiment, the MAC fallbackRAR in one MAC subPDU comprised in the first signal comprises the second identifier.

As one embodiment, the second identifier is an RAPID (Random Access Preamble Identifier).

As one embodiment, the second identifier is a preamble index.

As one embodiment, the second identifier is a PRACH preamble index.

As one embodiment, the second identifier is a C-RNTI (Cell-RNTI, Cell Radio Network Temporary Identity).

As one embodiment, the second identifier is a TC-RNTI (Temporary Cell-RNTI, Temporary Cell Radio Network Temporary Identity).

As one embodiment, the second identifier is a UE contention resolution identity .

As one embodiment, the second identifier corresponds to the K first-type sequences.

As one embodiment, the second identifier corresponds to at least one of the K first-type sequences.

As one embodiment, the second identifier corresponds to one of the K first-type sequences.

As one embodiment, the second identifier corresponds to any one of the K first-type sequences.

As one embodiment, the second identifier is used for identifying the K first-type sequences.

As one embodiment, the second identifier is used for identifying at least one of the K first-type sequences.

As one embodiment, the second identifier is used for identifying one of the K first-type sequences.

As one embodiment, the second identifier is used for identifying any one of the K first-type sequences.

As one embodiment, the second identifier is used for identifying a first sequence.

As one embodiment, the first sequence is any one of the K first-type sequences.

As one embodiment, the first sequence is one of the K first-type sequences.

As one embodiment, the second identifier is used for identifying the first sequence in the first random access occasion.

As one embodiment, the second identifier is used for identifying the first sequence, and the first sequence is one first-type sequence in the first random access occasion.

As one embodiment, the first random access occasion comprises a plurality of first-type sequences.

As one embodiment, the second identifier is used for identifying the first sequence, and the first sequence is one of the plurality of first-type sequences comprised in the first random access occasion.

As one embodiment, the second identifier is equal to an index of one of the K first-type sequences in a plurality of first-type sequences in one random access occasion.

As one embodiment, the second identifier is equal to the index of the first sequence.

As one embodiment, the second identifier is equal to the index of the first sequence in the plurality of first-type sequences comprised in the first random access occasion.

As one embodiment, the second signal belongs to a Message 3 (Msg3) of the Type-1 L1 random access procedure.

As one embodiment, the Message 3 of the Type-1 L1 random access procedure comprises the second signal.

As one embodiment, the second signal is a PUSCH (Physical Uplink Shared Channel) in the Message 2 of the Type-1 L1 random access procedure.

As one embodiment, the second signal is the Msg3 in the Message 2 of the Type-1 L1 random access procedure.

As one embodiment, the second signal is the Msg3 after fallback in the Type-2 L1 random access procedure.

As one embodiment, the second signal is the Msg3 after receiving the fallbackRAR in the Type-2 L1 random access procedure.

As one embodiment, the second signal comprises one TB.

As one embodiment, the second signal is transmitted on the PUSCH.

As one embodiment, the second signal comprises HARQ-ACK/NACK (Hybrid Automatic Repeat reQuest - Acknowledgment/Negative-acknowledgment) information.

As one embodiment, the second signal comprises all or part of one higher layer signaling.

As one embodiment, the second signal comprises all or part of one RRC (Radio Resource Control) layer signaling.

As one embodiment, the second signal comprises one or more fields in one RRC IE (Information Element).

As one embodiment, the second signal comprises all or part of one MAC layer signaling.

As one embodiment, the second signal comprises one or more fields in one MAC CE.

As one embodiment, the second signal comprises one or more fields in one PHY layer (Physical Layer) signaling.

As one embodiment, the second signal comprises RRC connection-related information.

As one embodiment, the second signal comprises packet data.

As one embodiment, the second signal comprises control plane information.

As one embodiment, the second signal comprises user plane information.

As one embodiment, the second signal comprises an RRC message.

As one embodiment, the second signal comprises an NAS (Non Access Stratum) message.

As one embodiment, the second signal comprises SDAP (Service Data Adaptation Protocol) data.

As one embodiment, the RRC connection-related information comprises at least one of an RRC Setup Request, an RRC Resume Request, an RRC Resume Request 1, an RRC Re-establishment Request, an RRC Reconfiguration Complete, an RRC Handover Confirm, and an RRC Early Data Request.

As one embodiment, the RRC connection-related information comprises at least one of an RRC Connection Request, an RRC Connection Resume Request, an RRC Connection Re-establishment, the RRC Handover Confirm, an RRC Connection Reconfiguration Complete, the RRC Early Data Request, the RRC Setup Request, the RRC Resume Request, the RRC Resume Request 1, the RRC Re-establishment Request, and the RRC Reconfiguration Complete.

As one embodiment, the second signal is one PUSCH.

As one embodiment, the second signal is one TB transmitted on one PUSCH.

As one embodiment, the second signal is scheduled by the first signal.

As one embodiment, the second signal is scheduled by one MAC subPDU in the first signal.

As one embodiment, the second signal is scheduled by the RAR in one MAC subPDU in the first signal.

As one embodiment, the second signal is scheduled by the RAR UL grant in one MAC subPDU in the first signal.

As one embodiment, the second signal is scheduled by the MAC subheader in one MAC subPDU in the first signal.

As one embodiment, the first signal is used for indicating the time-frequency resource occupied by the second signal.

As one embodiment, the first signal indicates the time-frequency resource occupied by the second signal.

As one embodiment, one MAC subPDU in the first signal is used for indicating the time-frequency resource occupied by the second signal.

As one embodiment, the RAR in one MAC subPDU in the first signal is used for indicating the time-frequency resource occupied by the second signal.

As one embodiment, the RAR UL grant in one MAC subPDU in the first signal is used for indicating the time-frequency resource occupied by the second signal.

As one embodiment, the MAC subheader in one MAC subPDU in the first signal is used for indicating the time-frequency resource occupied by the second signal.

As one embodiment, the time-frequency resource occupied by the second signal is one PUSCH.

As one embodiment, the PUSCH occupied by the second signal is indicated by the RAR UL grant in the first signal.

As one embodiment, the first signal indicates the MCS used by the second signal.

As one embodiment, a scrambling sequence of the second signal is initialized by the second identifier.

As one embodiment, the scrambling sequence of the second signal is initialized by the TC-RNTI comprised in the first signal.

As one embodiment, the scrambling sequence of the second signal is initialized by the C-RNTI comprised in the first signal.

As one embodiment, the second signal is sent by using the second spatial filter.

As one embodiment, the second spatial filter is related to the first spatial filter.

As one embodiment, the first spatial filter is used for determining the second spatial filter.

As one embodiment, the second spatial filter is the same as the first spatial filter.

As one embodiment, the uplink beam generated by the first spatial filter comprises the uplink beam generated by the second spatial filter.

As one embodiment, the uplink beam generated by the second spatial filter comprises the uplink beam generated by the first spatial filter. As one embodiment, the uplink beam generated by the first spatial filter overlaps the uplink beam generated by the second spatial filter.

As one embodiment, the transmission beam generated by the first spatial filter comprises the transmission beam generated by the second spatial filter.

As one embodiment, the transmission beam generated by the second spatial filter comprises the transmission beam generated by the first spatial filter.

As one embodiment, the transmission beam generated by the first spatial filter overlaps the transmission beam generated by the second spatial filter.

As one embodiment, the uplink transmission beam generated by the first spatial filter comprises the uplink transmission beam generated by the second spatial filter.

As one embodiment, the uplink transmission beam generated by the second spatial filter comprises the uplink transmission beam generated by the first spatial filter.

As one embodiment, the uplink transmission beam generated by the first spatial filter overlaps the uplink transmission beam generated by the second spatial filter.

### Embodiment 2

Embodiment 2 shows a schematic diagram of a network architecture according to the present application, as shown in FIG. 2. FIG. 2 illustrates a diagram of a network architecture 200 for 5G NR, LTE (Long-Term Evolution), and LTE-A (Long-Term Evolution Advanced) systems. The 5G NR or LTE network architecture 200 may be referred to as a 5GS (5G System)/EPS (Evolved Packet System) 200 or some other suitable terminologies. 5GS/EPS 200 may comprise one or more UE (User Equipment) 201, one piece of UE241 communicating with the UE201 via a sidelink, an NG-RAN (Next Generation Radio Access Network) 202, a 5GC (5G Core Network)/EPC (Evolved Packet Core) 210, an HSS (Home Subscriber Server)/UDM (Unified Data Management) 220, and an Internet service 230. The 5GS/EPS may be interconnected with other access networks, but these entities/interfaces are not shown for simplicity. As shown in the figure, the 5GS/EPS provides packet switching services, but those skilled in the art will readily appreciate that the various concepts presented throughout the present application may be extended to networks providing circuit switching services or other cellular networks. The NG-RAN comprises an NR node B (gNB) 203 and other gNBs 204. The gNB203 provides user and control plane protocol termination towards the UE201. The gNB203 may be connected to other gNBs 204 via an Xn interface (for example, backhaul). The gNB203 may also be referred to as a base station, a base transceiver station, a radio base station, a radio transceiving device, a transceiving device function, a basic service set (BSS), an extended service set (ESS), a TRP (Transmitter Receiver Point), or some other suitable terminologies. In an NTN network, examples of the gNB203 comprise a satellite, an aircraft, or a ground base station relayed by the satellite. The gNB203 provides an access point to the 5GC/EPC210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (for example, an MP3 player), a camera, a game console, an unmanned aerial vehicle, an aircraft, a narrowband Internet of Things device, a machine-type communication device, a land transportation vehicle, an automobile, a wearable device, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 through an S1/NG interface. The 5GC/EPC210 comprises an MME (Mobility Management Entity)/AMF (Authentication Management Field)/SMF (Session Management Function) 211, other MMEs/AMFs/SMFs 214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, which is connected to the P-GW/UPF213. The P-GW provides UE IP address allocation and other functions. The P-GW/UPF213 is connected to the Internet service 230. The Internet service 230 comprises operator-corresponding Internet protocol services, which may specifically comprise the Internet, an intranet, an IMS (IP Multimedia Subsystem), and a packet switching streaming service.

As one embodiment, a first node in the present application comprises the UE201.

As one embodiment, a second node in the present application comprises the gNB203.

As one embodiment, the user equipment in the present application comprises the UE201.

As one embodiment, the base station in the present application comprises the gNB203.

As one embodiment, a recipient of first configuration information in the present application comprises the UE201.

As one embodiment, a sender of the first configuration information in the present application comprises the gNB203.

As one embodiment, the recipient of a first synchronization signal/physical broadcast channel block in the present application comprises the UE201.

As one embodiment, the sender of the first synchronization signal/physical broadcast channel block in the present application comprises the gNB203.

As one embodiment, the sender of first-type sequences in the present application comprises theK UE201.

As one embodiment, the recipient of the K first-type sequences in the present application comprises the gNB203.

As one embodiment, the recipient of a first signaling and a first signal in the present application comprises the UE201.

As one embodiment, the sender of the first signaling and the first signal in the present application comprises the gNB203.

As one embodiment, the sender of a second signal in the present application comprises the UE201.

As one embodiment, the recipient of the second signal in the present application comprises the gNB203.

### Embodiment 3

Embodiment 3 shows a schematic diagram of one embodiment of a radio protocol architecture for a user plane and a control plane according to the present application, as shown in FIG. 3. FIG. 3 is a schematic diagram illustrating an embodiment of the radio protocol architecture for a user plane 350 and a control plane 300, and FIG. 3 shows the radio protocol architecture for a first node device (UE or an RSU in V2X, a vehicle-mounted device, or a vehicle-mounted communication module) and a second node device (a gNB, UE or the RSU in the V2X, the vehicle-mounted device, or the vehicular communication module), or the control plane 300 between two pieces of UE by using three layers: a layer 1, a layer 2, and a layer 3. The layer 1(L1 layer) is the lowest layer and implements various PHY (physical layer) signal processing functions. The L1 layer will be referred to as a PHY301 herein. The layer 2 (L2 layer) 305 is above the PHY301 and is responsible for a link between the first node device and the second node device and the two pieces of UE through the PHY301. The L2 layer 305 comprises an MAC (Medium Access Control) sublayer 302, an RLC (Radio Link Control) sublayer 303, and a PDCP (Packet Data Convergence Protocol) sublayer 304,and these sublayers terminate at the second node device. The PDCP sublayer 304 provides data encryption and integrity protection, and the PDCP sublayer 304 also provides handover support for the first node device to the second node device. The RLC sublayer 303 provides segmentation and reassembly of data packets and implements retransmission of lost data packets through an ARQ. The RLC sublayer 303 also provides duplicate data packet detection and protocol error detection. The MAC sublayer 302 provides mapping between logical and transport channels and multiplexing of the logical channel. The MAC sublayer 302 is also responsible for allocating various radio resources (for example, resource blocks) in one cell between the first node devices. The MAC sublayer 302 is also responsible for an HARQ operation. An RRC (Radio Resource Control) sublayer 306 in the layer 3 (L3 layer) in the control plane 300 is responsible for obtaining radio resources (that is, radio bearers) and configuring lower layers using an RRC signaling between the second node device and the first node device. The radio protocol architecture of the user plane 350 comprises the layer 1 (L1 layer) and the layer 2 (L2 layer). The radio protocol architecture for the first node device and the second node device in the user plane 350 is substantially the same as the corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for upper layer data packets to reduce wireless transmission overheads. The L2 layer 355 in the user plane 350 also comprises an SDAP (Service Data Adaptation Protocol) sublayer 356, and the SDAP sublayer 356 is responsible for mapping between QoS streams and data radio bearers (DRBs) to support the diversity of services. Although not shown in the figure, the first node device may have several upper layers above the L2 layer 355, comprising a network layer (for example, an IP layer) terminating at a P-GW on a network side and an application layer terminating at the other end of the connection(for example, remote UE and a server).

As one embodiment, the radio protocol architecture in FIG. 3 is applicable to a first node in the present application.

As one embodiment, the radio protocol architecture in FIG. 3 is applicable to a second node in the present application.

As one embodiment, first configuration information in the present application is generated on the RRC sublayer 306.

As one embodiment, the first configuration information in the present application is transmitted to the PHY301 via the MAC sublayer 302.

As one embodiment, a first synchronization signal/physical broadcast channel block in the present application is generated on the PHY301 and the RRC sublayer 306.

As one embodiment, K first-type sequences in the present application are generated on the PHY301.

As one embodiment, a first signaling in the present application is generated on the PHY301.

As one embodiment, the first signaling in the present application is generated on the MAC sublayer 302.

As one embodiment, the first signaling in the present application is transmitted to the PHY301 via the MAC sublayer 302.

As one embodiment, a first signal in the present application is generated on the MAC sublayer 302.

As one embodiment, the first signal in the present application is transmitted to the PHY301 via the MAC sublayer 302.

As one embodiment, a second signal in the present application is generated on the RRC sublayer 306.

As one embodiment, the second signal in the present application is transmitted to the PHY301 via the MAC sublayer 302.

### Embodiment 4

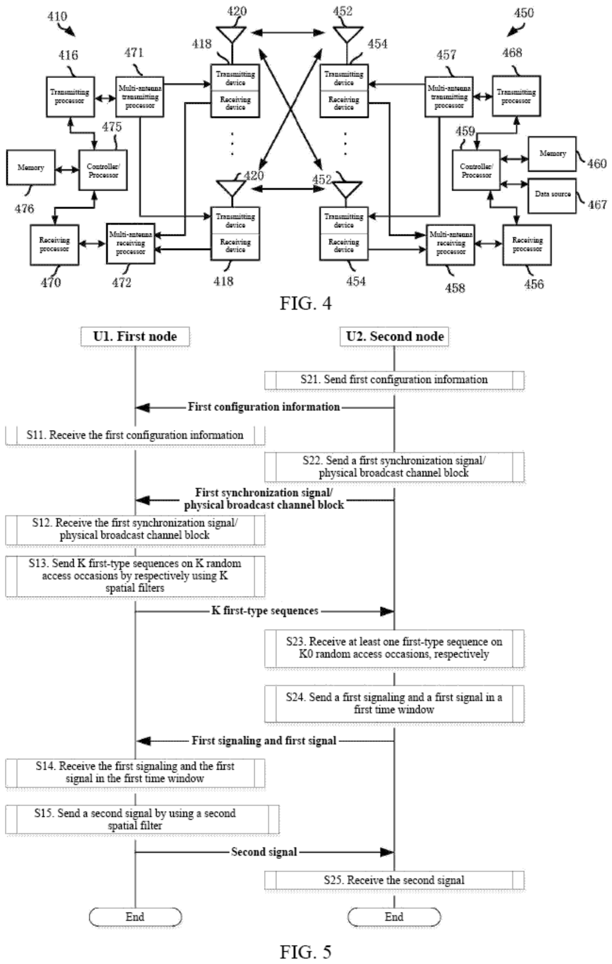

Embodiment 4 shows a schematic diagram of a first communication device and a second communication device according to the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In transmission from the first communication device 410 to the second communication device 450, at the first communication device 410, an upper layer data packet from a core network is provided to the controller/processor 475. The controller/processor 475 implements the functionality of an L2 layer. In the transmission from the first communication device 410 to the first communication device 450, the controller/processor 475 provides header compression, encryption, packet segmentation and reordering, multiplexing between logical and transport channels, and radio resource allocation for the second communication device 450 based on various priority metrics. The controller/processor 475 is also responsible for retransmission of lost packets and signalings to the second communication device 450. The transmitting processor 416 and the multi-antenna transmitting processor 471 implement various signal processing functions for an L1 layer (that is, a physical layer). The transmitting processor 416 implements encoding and interleaving to facilitate forward error correction (FEC) at the second communication device 450, as well as mapping of signal constellations based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols, to generate one or more spatial streams. The transmitting processor 416 then maps each spatial stream to a subcarrier, multiplexes with a reference signal (for example, a pilot) in a time domain and/or frequency domain, and then uses inverse fast Fourier transform (IFFT) to generate a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream and then provides the radio frequency stream to different antennas 420.

In the transmission from the first communication device 410 to the second communication device 450, at the second communication device 450, each receiving device 454 receives a signal through a corresponding antenna 452. Each receiving device 454 recovers information modulated onto a radio frequency carrier, converts the radio frequency stream into the baseband multi-carrier symbol stream, and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses fast Fourier transform (FFT) to convert the baseband multi-carrier symbol stream after the receiving analog precoding/beamforming operation from the time domain to the frequency domain. In the frequency domain, a physical layer data signal and a reference signal are demultiplexed by the receiving processor 456, wherein the reference signal will be used for channel estimation, and the data signal is recovered after multi-antenna detection in the multi-antenna receiving processor 458 to any spatial stream destined for the second communication device 450. Symbols on each spatial stream are demodulated and recovered in the receiving processor 456, and soft decisions are generated. The receiving processor 456 then decodes and deinterleaves the soft decisions to recover upper layer data and control signals that are transmitted by the first communication device 410 on the physical channel. The upper layer data and the control signals are then provided to the controller/processor 459. The controller/processor 459 implements functions of the L2 layer. The controller/processor 459 may be associated with the memory 460 storing program codes and data. The memory 460 may be referred to as a computer-readable medium. In the transmission from the first communication device 410 to the second communication device 450, the controller/processor 459 provides multiplexing between transport and logical channels, packet reassembly, decryption, header decompression, and control signal processing to recover the upper layer data packet from the core network. The upper layer data packet is then provided to all protocol layers above the L2 layer. Various control signals may also be provided to an L3 for L3 processing.

In transmission from the second communication device 450 to the first communication device 410, at the second communication device 450, the upper layer data packet is provided to the controller/processor 459 by using the data source 467. The data source 467 represents all protocol layers above the L2 layer. Similar to a sending function at the first communication device 410 described in the transmission from the first communication device 410 to the second communication device 450, the controller/processor 459 implements header compression, encryption, packet segmentation and reordering, and multiplexing between logical and transport channels based on radio resource allocation, implementing the functions of the L2 layer for the user plane and the control plane. The controller/processor 459 is also responsible for retransmission of lost packets and signalings to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. The transmitting processor 468 then modulates the generated spatial stream into a multi-carrier/single-carrier symbol stream, which is provided to different antennas 452 via the transmitting device 454 after an analog precoding/beamforming operation in the multi-antenna transmitting processor 457. Each transmitting device 454 first converts a baseband symbol stream provided by the multi-antenna transmitting processor 457 into a radio frequency symbol stream and then provides the radio frequency symbol stream to the antenna 452.

In the transmission from the second communication device 450 to the first communication device 410, a function at the first communication device 410 is similar to a receiving function at the second communication device 450 described in the transmission from the first communication device 410 to the second communication device 450. Each receiving device 418 receives a radio frequency signal through a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 storing program codes and data. The memory 476 may be referred to as a computer-readable medium. In the transmission from the second communication device 450 to the first communication device 410, the controller/processor 475 provides multiplexing between transport and logical channels, packet reassembly, decryption, header decompression, and control signal processing to recover an upper layer data packet from UE450. The upper layer data packet from the controller/processor 475 may be provided to the core network.

As one embodiment, a first node in the present application comprises the second communication device 450, and a second node in the present application comprises the first communication device 410.

As one sub-embodiment of the above embodiment, the first node is user equipment, and the second node is a base station device.

As one sub-embodiment of the above embodiment, the first node is the user equipment, and the second node is a relay node.

As one sub-embodiment of the above embodiment, the first node is the relay node, and the second node is the base station device.

As one sub-embodiment of the above embodiment, the second communication device 450 comprises: at least one controller/processor; and the at least one controller/processor is responsible for an HARQ operation.

As one sub-embodiment of the above embodiment, the first communication device 410 comprises: at least one controller/processor; and the at least one controller/processor is responsible for the HARQ operation.

As one sub-embodiment of the above embodiment, the first communication device 410 comprises: at least one controller/processor; and the at least one controller/processor is responsible for error detection by using a positive acknowledgment (ACK) and/or negative acknowledgment (NACK) protocol to support the HARQ operation.

As one embodiment, the second communication device 450 comprises: at least one processor and at least one memory, and the at least one memory comprises computer program codes; and the at least one memory and the computer program codes are configured to be used together with the at least one processor. The second communication device 450 apparatus at least: sends K first-type sequences on K random access occasions by respectively using K spatial filters, wherein K is a positive integer greater than 1; receives a first signaling and a first signal in a first time window, wherein the first signaling is used for scheduling the first signal, and at least one of the first signaling or the first signal is used for determining a first identifier; and sends a second signal by using a second spatial filter, wherein the first signal carries a second identifier, and the second identifier is used for identifying at least one of the K first-type sequences; the first signal is used for indicating a time-frequency resource occupied by the second signal; the first identifier is used for indicating a first random access occasion, which is one of the K random access occasions; the first random access occasion corresponds to a first spatial filter, which is one of the K spatial filters; and the first spatial filter is used for determining the second spatial filter.

As one embodiment, the second communication device 450 comprises: a memory storing a computer-readable instruction program, the computer-readable instruction program generates an action when executed by at least one processor, and the action comprises: sending K first-type sequences on K random access occasions by respectively using K spatial filters, wherein K is a positive integer greater than 1; receiving the first signaling and the first signal in the first time window, wherein the first signaling is used for scheduling the first signal, and at least one of the first signaling or the first signal is used for determining the first identifier; and sending the second signal by using the second spatial filter, wherein the first signal carries the second identifier, and the second identifier is used for identifying at least one of the K first-type sequences; the first signal is used for indicating the time-frequency resource occupied by the second signal; the first identifier is used for indicating the first random access occasion, which is one of the K random access occasions; the first random access occasion corresponds to the first spatial filter, which is one of the K spatial filters; and the first spatial filter is used for determining the second spatial filter.

As one embodiment, the first communication device 410 comprises: at least one processor and at least one memory, and the at least one memory comprises computer program codes; and the at least one memory and the computer program codes are configured to be used together with the at least one processor. The first communication device 410 apparatus at least: receives at least one first-type sequence on K0 random access occasions, respectively, wherein K0 is a positive integer greater than 1; sends the first signaling and the first signal in the first time window, wherein the first signaling is used for scheduling the first signal, and at least one of the first signaling or the first signal is used for indicating the first identifier; and receives the second signal, wherein the first signal is used for carrying the second identifier, and the second identifier is used for identifying the at least one first-type sequence; the first signal is used for indicating the time-frequency resource occupied by the second signal; the first identifier is used for indicating the first random access occasion, which is one of the K0 random access occasions; the at least one first-type sequence is transmitted by respectively using at least one spatial filter, and the first random access occasion corresponds to the first spatial filter, which is one of the at least one spatial filter; and the first spatial filter is used for determining the second spatial filter, and the second signal is transmitted by using the second spatial filter.

As one embodiment, the first communication device 410 comprises: a memory storing a computer-readable instruction program, the computer-readable instruction program generates the action when executed by at least one processor, and the action comprises: receiving at least one first-type sequence on K0 random access occasions, respectively, wherein K0 is a positive integer greater than 1; sending the first signaling and the first signal in the first time window, wherein the first signaling is used for scheduling the first signal, and at least one of the first signaling or the first signal is used for indicating the first identifier; and receiving the second signal, wherein the first signal is used for carrying the second identifier, and the second identifier is used for identifying the at least one first-type sequence; the first signal is used for indicating the time-frequency resource occupied by the second signal; the first identifier is used for indicating the first random access occasion, which is one of the K0 random access occasions; the at least one first-type sequence is transmitted by respectively using at least one spatial filter, and the first random access occasion corresponds to the first spatial filter, which is one of the at least one spatial filter; and the first spatial filter is used for determining the second spatial filter, and the second signal is transmitted by using the second spatial filter.

As one embodiment, at least one of {the antenna 452, the transmitting device 454, the multi-antenna transmitting processor 458, the transmitting processor 468, the controller/processor 459, the memory 460, and the data source 467} is used for sending the K first-type sequences on the K random access occasions by respectively using the K spatial filters in the present application.

As one embodiment, at least one of {the antenna 452, the receiving device 454, the multi-antenna receiving processor 458, the receiving processor 456, the controller/processor 459, the memory 460, and the data source 467} is used for receiving the first signaling and the first signal in the first time window in the present application.

As one embodiment, at least one of {the antenna 452, the transmitting device 454, the multi-antenna transmitting processor 458, the transmitting processor 468, the controller/processor 459, the memory 460, and the data source 467} is used for sending the second signal by using the second spatial filter in the present application.

As one embodiment, at least one of {the antenna 452, the receiving device 454, the multi-antenna receiving processor 458, the receiving processor 456, the controller/processor 459, the memory 460, and the data source 467} is used for receiving a first synchronization signal/physical broadcast channel block in the present application.

As one embodiment, at least one of {the antenna 452, the receiving device 454, the multi-antenna receiving processor 458, the receiving processor 456, the controller/processor 459, the memory 460, and the data source 467} is used for receiving first configuration information in the present application.

As one embodiment, at least one of {the antenna 420, the receiving device 418, the multi-antenna receiving processor 472, the receiving processor 470, the controller/processor 475, and the memory 476} is used for receiving the at least one first-type sequence on the K0 random access occasions respectively in the present application.

As one embodiment, at least one of {the antenna 420, the transmitting device 418, the multi-antenna transmitting processor 471, the transmitting processor 416, the controller/processor 475, and the memory 476} is used for sending the first signaling and the first signal in the first time window in the present application.

As one embodiment, at least one of {the antenna 420, the receiving device 418, the multi-antenna receiving processor 472, the receiving processor 470, the controller/processor 475, and the memory 476} is used for receiving the second signal in the present application.

As one embodiment, at least one of {the antenna 420, the transmitting device 418, the multi-antenna transmitting processor 471, the transmitting processor 416, the controller/processor 475, and the memory 476} is used for sending the first synchronization signal/physical broadcast channel block in the present application.

As one embodiment, at least one of {the antenna 420, the transmitting device 418, the multi-antenna transmitting processor 471, the transmitting processor 416, the controller/processor 475, and the memory 476} is used for sending the first configuration information in the present application.

### Embodiment 5

Embodiment 5 shows a wireless signal transmission flowchart according to one embodiment of the present application, as shown in FIG. 5. In FIG. 5, a first node U1 communicates with a second node U2 through an air interface.

For the first node U1, it receives first configuration information in step S11; receives a first synchronization signal/physical broadcast channel block in step S11; sends K first-type sequences on K random access occasions by respectively using K spatial filters in step S13; receives a first signaling and a first signal in a first time window in step S14; and sends a second signal by using a second spatial filter in step S15, wherein K is a positive integer greater than 1.

For the second node U2, it sends the first configuration information in step S21; sends the first synchronization signal/physical broadcast channel block in step S22; receives at least one first-type sequence on K0 random access occasions respectively in step S23; sends the first signaling and the first signal in the first time window in step S24; and receives the second signal in step S25, wherein K0 is a positive integer not less than K.

In Embodiment 5, the first configuration information is used for determining an association of a plurality of candidate synchronization signal/physical broadcast channel blocks with a plurality of random access occasions; the first synchronization signal/physical broadcast channel block is one of the plurality of candidate synchronization signal/physical broadcast channel blocks; a plurality of measurement results respectively for the plurality of candidate synchronization signal/physical broadcast channel blocks are used by the first node U1 for determining the first synchronization signal/physical broadcast channel block from the plurality of candidate synchronization signal/physical broadcast channel blocks; the K0 random access occasions are associated with the first synchronization signal/physical broadcast channel block; a measurement result for the first synchronization signal/physical broadcast channel block is used by the first node U1 for determining K, and the K0 random access occasions comprise the K random access occasions; and the first signaling is used for scheduling the first signal, wherein the first signal carries a second identifier, and the second identifier is used for identifying at least one of the K first-type sequences; the first signal is used for indicating a time-frequency resource occupied by the second signal; at least one of the first signaling or the first signal is used by the first node U1 for determining a first identifier, and the first identifier is used for indicating a first random access occasion, which is one of the K random access occasions; the first random access occasion corresponds to a first spatial filter, which is one of the K spatial filters; and the first spatial filter is used by the first node U1 for determining the second spatial filter.

As one embodiment, a first symbol index, a first slot index, and a first frequency domain index are related to the first random access occasion; the first symbol index, the first slot index, and the first frequency domain index are all used for generating the first identifier; and the first identifier is used for scrambling the first signaling.

As one embodiment, the first identifier is used for indicating the first random access occasion from the K random access occasions; and the first signaling comprises a plurality of fields, and the first identifier is one of the plurality of fields comprised in the first signaling.

As one embodiment, the first signal comprises a plurality of fields, and the first identifier is one of the plurality of fields comprised in the first signal.

As one embodiment, the first configuration information comprises a higher layer signaling.

As one embodiment, the first configuration information comprises an SIB (System Information Block).

As one embodiment, the first configuration information comprises an MIB (Master Information Block).

As one embodiment, the first configuration information comprises system information transmitted on a BCH (Broadcast Channel).

As one embodiment, the first configuration information comprises at least one higher layer signaling.

As one embodiment, the first configuration information comprises at least one RRC layer signaling.

As one embodiment, the first configuration information comprises at least one RRC IE (Information Element).

As one embodiment, the first configuration information comprises at least one field in one RRC IE.

As one embodiment, the first configuration information is used for indicating a cell-specific random access parameter.

As one embodiment, the first configuration information comprises *RACH-ConfigCommon.*

As one embodiment, a definition of the *RACH-ConfigCommon* refers to Chapter 6.3.2 of 3GPP TS38.331.

As one embodiment, the first configuration information comprises *RACH-ConfigDedicated.*

As one embodiment, the definition of the *RACH-ConfigDedicated* refers to Chapter 6.3.2 of 3GPP TS38.331.

As one embodiment, the first configuration information comprises *RACH-ConfigGeneric.*

As one embodiment, the definition of the *RACH-ConfigGeneric* refers to Chapter 6.3.2 of 3GPP TS38.331.

As one embodiment, the first configuration information comprises *ssb-perRACH-OccasionAndCB-PreamblesPerSSB.*

As one embodiment, the definition of the *ssb-perRACH-OccasionAndCB-PreamblesPerSSB* refers to Chapter 6.3.2 of 3GPP TS38.331.

As one embodiment, the first configuration information is used for indicating a first sequence set, the first sequence set comprises a plurality of first-type sequences, and any one of the K first-type sequences is one first-type sequence in the first sequence set.

As one embodiment, any first-type sequence in the first sequence set is a pseudo-random sequence.

As one embodiment, any first-type sequence in the first sequence set is a ZC sequence.

As one embodiment, any first-type sequence in the first sequence set is a random access preamble.

As one embodiment, any first-type sequence in the first sequence set is a PRACH Preamble.

As one embodiment, any first-type sequence in the first sequence set is the random access preamble in an Msg1 of a Type-1 L1 random access procedure.

As one embodiment, any first-type sequence in the first sequence set is the PRACH preamble in the Msg1 of the Type-1 L1 random access procedure.

As one embodiment, any first-type sequence in the first sequence set is the random access preamble of a 4-step random access procedure.

As one embodiment, any first-type sequence in the first sequence set is the PRACH preamble of the 4-step random access procedure.

As one embodiment, the first configuration information is used for indicating a first random access occasion set, the first random access occasion set comprises a plurality of random access occasions, and any one of the K random access occasions is one random access occasion in the first random access occasion set.

As one embodiment, any random access occasion in the first random access occasion set is one PRACH occasion.

As one embodiment, any random access occasion in the first random access occasion set is one RO.

As one embodiment, any random access occasion in the first random access occasion set occupies a plurality of REs.

As one embodiment, any RE occupied by any random access occasion in the first random access occasion set occupies one symbol in a time domain and occupies one subcarrier in a frequency domain.

As one embodiment, at least two random access occasions in the first random access occasion set are FDM (Frequency Division Multiplexing).

As one embodiment, at least two random access occasions in the first random access occasion set are TDM.

As one embodiment, any two random access occasions in the first random access occasion set are orthogonal.

As one embodiment, the first random access occasion set occupies at least one slot in the time domain.

As one embodiment, the first random access occasion set occupies at least one time domain resource in at least one slot in the time domain.

As one embodiment, the first random access occasion set occupies at least one frequency domain resource in the frequency domain.

As one embodiment, the first random access occasion set comprises all PRACH occasions in at least one SS/PBCH block indexes to PRACH occasions mapping cycle.

As one embodiment, the first random access occasion set comprises all PRACH occasions in at least one association period.

As one embodiment, the first random access occasion set comprises all PRACH occasions in at least one association pattern period.

As one embodiment, the one association period comprises a plurality of SS/PBCH block indexes to PRACH occasions mapping cycles.

As one embodiment, a first association pattern period comprises at least one radio frame.

As one embodiment, the first association pattern period comprises at least one subframe.

As one embodiment, the first association pattern period comprises at least one slot.

As one embodiment, the first association pattern period is continuous in time.

As one embodiment, a unit of the first association pattern period is millisecond.

As one embodiment, the first association pattern period may be up to 160 milliseconds.

As one embodiment, the first association pattern period comprises one or more association periods.

As one embodiment, any SS/PBCH block indexes to PRACH occasions mapping cycle in any association period in the first association pattern period is a period in which a plurality of candidate synchronization signal/physical broadcast channel blocks (SSB, SS/PBCH Block) are associated with a plurality of PRACH occasions.

As one embodiment, the first configuration information is used for indicating the first sequence set in the first random access occasion set.

As one embodiment, any first-type sequence in the first sequence set occupies one random access occasion in the first random access occasion set.

As one embodiment, the first configuration information is used for indicating that the plurality of candidate synchronization signal/physical broadcast channel blocks are associated with the plurality of random access occasions.

As one embodiment, the first configuration information is used for indicating that any one of the plurality of candidate synchronization signal/physical broadcast channel blocks is associated with at least one random access occasion in the first random access occasion set.

As one embodiment, the first configuration information is used for indicating that any one of the plurality of candidate synchronization signal/physical broadcast channel blocks is associated with at least one first-type sequence in at least one random access occasion in the first random access occasion set.

As one embodiment, "the plurality of candidate synchronization signal/physical broadcast channel blocks are associated with the plurality of random access occasions" refers to: any one of the plurality of candidate synchronization signal/physical broadcast channel blocks is used for determining the at least one random access occasion from the plurality of random access occasions.

As one embodiment, "any one of the plurality of candidate synchronization signal/physical broadcast channel blocks is associated with the at least one random access occasion in the first random access occasion set" refers to: any one of the plurality of candidate synchronization signal/physical broadcast channel blocks is used for determining the at least one random access occasion from the first random access occasion set.

As one embodiment, "any one of the plurality of candidate synchronization signal/physical broadcast channel blocks is associated with at least one first-type sequence in at least one random access occasion in the first random access occasion set" refers to: any one of the plurality of candidate synchronization signal/physical broadcast channel blocks is used for determining the at least one random access occasion from the first random access occasion set and determining the at least one first-type sequence from the at least one random access occasion.

### Embodiment 6

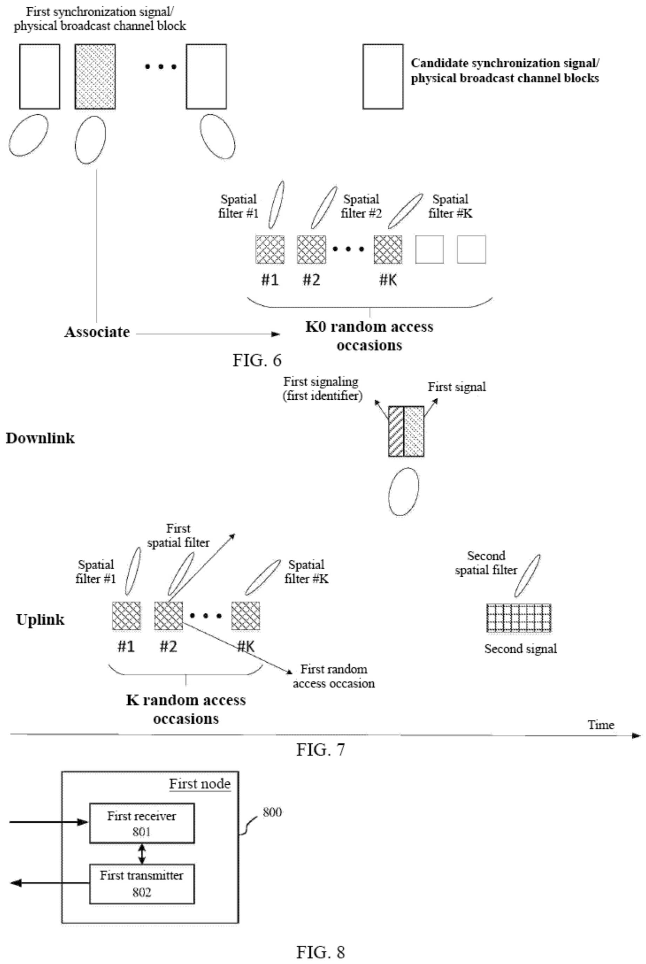

Embodiment 6 shows a schematic diagram of a relationship between a first synchronization signal/physical broadcast channel block and K random access occasions according to one embodiment of the present application, as shown in FIG. 6. In FIG. 6, each rectangle represents one candidate synchronization signal/physical broadcast channel block in the present application, and each square represents one random access occasion in the present application; a rectangle filled with wave points represents the first synchronization signal/physical broadcast channel block in the present application; and squares filled with diagonal grids represents K random access occasions in the present application.

In Embodiment 6, the first synchronization signal/physical broadcast channel block is one of a plurality of candidate synchronization signal/physical broadcast channel blocks; a plurality of measurement results respectively for the plurality of candidate synchronization signal/physical broadcast channel blocks are used for determining the first synchronization signal/physical broadcast channel block from the plurality of candidate synchronization signal/physical broadcast channel blocks; the first synchronization signal/physical broadcast channel block is associated with the K0 random access occasions; and a measurement result for the first synchronization signal/physical broadcast channel block is used for determining the K random access occasions, the K random access occasions belong to the K0 random access occasions, K is a positive integer greater than 1, and K0 is a positive integer not less than K.

As one embodiment, the first synchronization signal/physical broadcast channel block is one of the plurality of candidate synchronization signal/physical broadcast channel blocks.

As one embodiment, any one of the plurality of candidate synchronization signal/physical broadcast channel blocks comprises a PSS (Primary Synchronization Signal), an SSS (Secondary Synchronization Signal), and a PBCH (Physical Broadcast Channel).

As one embodiment, any one of the plurality of candidate synchronization signal/physical broadcast channel blocks is one SS/PBCH block (Synchronization Signal/Physical Broadcast Channel Block, SSB).

As one embodiment, the first synchronization signal/physical broadcast channel block comprises the PSS, the SSS, and the PBCH.

As one embodiment, the first synchronization signal/physical broadcast channel block is one SS/PBCH block.

As one embodiment, the plurality of measurement results respectively for the plurality of candidate synchronization signal/physical broadcast channel blocks respectively comprise a plurality of SS-RSRP (Synchronization Signal Reference Signal Received Power).

As one embodiment, the measurement result for any one of the plurality of candidate synchronization signal/physical broadcast channel blocks comprises the SS-RSRP.

As one embodiment, the plurality of measurement results respectively for the plurality of candidate synchronization signal/physical broadcast channel blocks respectively comprise a plurality of SS-RSRQ (Synchronization Signal Reference Signal Received Quality).

As one embodiment, the measurement result for any one of the plurality of candidate synchronization signal/physical broadcast channel blocks comprises the SS-RSRQ.

As one embodiment, the plurality of measurement results respectively for the plurality of candidate synchronization signal/physical broadcast channel blocks respectively comprise a plurality of SS-SINRs (Synchronization Signal Signal-to-Noise and Interference Ratio).

As one embodiment, the measurement result for any one of the plurality of candidate synchronization signal/physical broadcast channel blocks comprises the SS-SINR.

As one embodiment, a unit of the measurement result for any one of the plurality of candidate synchronization signal/physical broadcast channel blocks is dB (decibel).

As one embodiment, the unit of the measurement result for any one of the plurality of candidate synchronization signal/physical broadcast channel blocks is dBm (decibel-milliwatt).

As one embodiment, the unit of the measurement result for any one of the plurality of candidate synchronization signal/physical broadcast channel blocks is W (watt).

As one embodiment, the unit of the measurement result for any one of the plurality of candidate synchronization signal/physical broadcast channel blocks is mW (milliwatt).

As one embodiment, the measurement result for the first synchronization signal/physical broadcast channel block is one of the plurality of measurement results respectively for the plurality of candidate synchronization signal/physical broadcast channel blocks.

As one embodiment, the measurement result for the first synchronization signal/physical broadcast channel block comprises the SS-RSRP.

As one embodiment, the measurement result for the first synchronization signal/physical broadcast channel block comprises the SS-RSRQ.

As one embodiment, the measurement result for the first synchronization signal/physical broadcast channel block comprises the SS-SINR.

As one embodiment, the unit of the measurement result for the first synchronization signal/physical broadcast channel block is dB.

As one embodiment, the unit of the measurement result for the first synchronization signal/physical broadcast channel block is dBm.

As one embodiment, the unit of the measurement result for the first synchronization signal/physical broadcast channel block is W.

As one embodiment, the unit of the measurement result for the first synchronization signal/physical broadcast channel block is mW.

As one embodiment, "the plurality of measurement results respectively for the plurality of candidate synchronization signal/physical broadcast channel blocks are used for determining the first synchronization signal/physical broadcast channel block from the plurality of candidate synchronization signal/physical broadcast channel blocks" comprises: the measurement result for the first synchronization signal/physical broadcast channel block is one largest measurement result in the plurality of measurement results respectively for the plurality of candidate synchronization signal/physical broadcast channel blocks.

As one embodiment, "the plurality of measurement results respectively for the plurality of candidate synchronization signal/physical broadcast channel blocks are used for determining the first synchronization signal/physical broadcast channel block from the plurality of candidate synchronization signal/physical broadcast channel blocks" comprises: the measurement result for the first synchronization signal/physical broadcast channel block is one smallest measurement result in the plurality of measurement results respectively for the plurality of candidate synchronization signal/physical broadcast channel blocks.

As one embodiment, "the plurality of measurement results respectively for the plurality of candidate synchronization signal/physical broadcast channel blocks are used for determining the first synchronization signal/physical broadcast channel block from the plurality of candidate synchronization signal/physical broadcast channel blocks" comprises: the measurement result for the first synchronization signal/physical broadcast channel block is one first measurement result greater than a first measurement threshold in the plurality of measurement results respectively for the plurality of candidate synchronization signal/physical broadcast channel blocks.

As one embodiment, "the plurality of measurement results respectively for the plurality of candidate synchronization signal/physical broadcast channel blocks are used for determining the first synchronization signal/physical broadcast channel block from the plurality of candidate synchronization signal/physical broadcast channel blocks" comprises: the measurement result for the first synchronization signal/physical broadcast channel block is one last measurement result greater than the first measurement threshold in the plurality of measurement results respectively for the plurality of candidate synchronization signal/physical broadcast channel blocks.

As one embodiment, the first measurement threshold is configured by one higher layer signaling.

As one embodiment, the first measurement threshold is an L1-RSRP threshold (layer 1-reference signal received power threshold).

As one embodiment, the first measurement threshold is an L1-RSRQ threshold (layer 1-reference signal received quality threshold).

As one embodiment, the first measurement threshold is an L1-SINR threshold (layer 1-signal-to-noise and interference ratio threshold).

As one embodiment, the first measurement threshold is used for determining the first synchronization signal/physical broadcast channel block from the plurality of candidate synchronization signal/physical broadcast channel blocks.

As one embodiment, the first measurement threshold is *rsrp-ThresholdSS.*

As one embodiment, a definition of the *rsrp-ThresholdSS* is referred to 3GPP TS38.321.

As one embodiment, the first measurement threshold is *rsrp-ThresholdSSB.*

As one embodiment, the definition of the *rsrp-ThresholdSS* is referred to 3GPP TS38.331.

As one embodiment, first configuration information is used for indicating that the first synchronization signal/physical broadcast channel block is associated with the K0 random access occasions, and K0 is a positive integer greater than 1.

As one embodiment, the K0 random access occasions are TDM.

As one embodiment, the first configuration information is used for indicating that the first synchronization signal/physical broadcast channel block is associated with the K0 random access occasions in a first random access occasion set.

As one embodiment, the first configuration information is used for indicating that the first synchronization signal/physical broadcast channel block is associated with at least one first-type sequence in the K0 random access occasions in the first random access occasion set.

As one embodiment, "the first synchronization signal/physical broadcast channel block is associated with the K0 random access occasions" refers to: the first synchronization signal/physical broadcast channel block is used for determining the K0 random access occasions from the plurality of random access occasions.

As one embodiment, "the first synchronization signal/physical broadcast channel block is associated with the K0 random access occasions in the first random access occasion set" refers to: the first synchronization signal/physical broadcast channel block is used for determining the K0 random access occasions from the first random access occasion set.

As one embodiment, "the first synchronization signal/physical broadcast channel block is associated with at least one first-type sequence in the K0 random access occasions in the first random access occasion set" refers to: the first synchronization signal/physical broadcast channel block is used for determining the K0 random access occasions from the first random access occasion set and determining the at least one first-type sequence from the K0 random access occasions.

As one embodiment, the K random access occasions belong to the K0 random access occasions, and K is a positive integer not greater than K0.

As one embodiment, the K0 random access occasions comprise the K random access occasions, and K is a positive integer not greater than K0.

As one embodiment, any one of the K random access occasions is one of the K0 random access occasions.

As one embodiment, the K random access occasions are earliest K random access occasions in the K0 random access occasions.

As one embodiment, the K random access occasions are last K random access occasions in the K0 random access occasions.

As one embodiment, the K random access occasions are adjacent K random access occasions in the K0 random access occasions.

As one embodiment, the K random access occasions are equally spaced K random access occasions in the K0 random access occasions.

As one embodiment, "the first synchronization signal/physical broadcast channel block is associated with the K random access occasions" refers to: the first synchronization signal/physical broadcast channel block is used for determining the K random access occasions from the plurality of random access occasions.

As one embodiment, "the first synchronization signal/physical broadcast channel block is associated with the K random access occasions in the first random access occasion set" refers to: the first synchronization signal/physical broadcast channel block is used for determining the K random access occasions from the first random access occasion set.

As one embodiment, "the first synchronization signal/physical broadcast channel block is associated with at least one first-type sequence in the K random access occasions in the first random access occasion set" refers to: the first synchronization signal/physical broadcast channel block is used for determining the K random access occasions from the first random access occasion set and determining the at least one first-type sequence from the K random access occasions.

As one embodiment, the measurement result for the first synchronization signal/physical broadcast channel block is used for determining the K random access occasions.

As one embodiment, the measurement result for the first synchronization signal/physical broadcast channel block is used for determining the K random access occasions from the K0 random access occasions, and K0 is a positive integer not less than K.

As one embodiment, "the measurement result for the first synchronization signal/physical broadcast channel block is used for determining the K random access occasions" comprises: the measurement result for the first synchronization signal/physical broadcast channel block is used for determining the first synchronization signal/physical broadcast channel block from the plurality of candidate synchronization signal/physical broadcast channel blocks, and the first synchronization signal/physical broadcast channel block is associated with the K random access occasions.

As one embodiment, "the measurement result for the first synchronization signal/physical broadcast channel block is used for determining the K random access occasions" comprises: the first synchronization signal/physical broadcast channel block is associated with the K0 random access occasions, and the measurement result for the first synchronization signal/physical broadcast channel block is used for determining the K random access occasions from the K0 random access occasions.

As one embodiment, "the measurement result for the first synchronization signal/physical broadcast channel block is used for determining the K random access occasions" comprises: the measurement result for the first synchronization signal/physical broadcast channel block is used for determining the first synchronization signal/physical broadcast channel block from the plurality of candidate synchronization signal/physical broadcast channel blocks, the first synchronization signal/physical broadcast channel block is associated with the K0 random access occasions, and the measurement result for the first synchronization signal/physical broadcast channel block is used for determining the K random access occasions from the K0 random access occasions.

As one embodiment, whether the measurement result for the first synchronization signal/physical broadcast channel block is greater than a second measurement threshold is used for determining the K random access occasions.

As one embodiment, the measurement result for the first synchronization signal/physical broadcast channel block is greater than the second measurement threshold, and the K random access occasions in the K0 random access occasions are selected for sending the K first-type sequences.

As one embodiment, the measurement result for the first synchronization signal/physical broadcast channel block is less than the second measurement threshold, and the K0 random access occasions are all used for sending the K0 first-type sequences.

As one embodiment, when the measurement result for the first synchronization signal/physical broadcast channel block is greater than the second measurement threshold, the K random access occasions in the K0 random access occasions are selected for sending the K first-type sequences; and when the measurement result for the first synchronization signal/physical broadcast channel block is less than the second measurement threshold, the K0 random access occasions are all used for sending the K0 first-type sequences.

As one embodiment, whether the measurement result for the first synchronization signal/physical broadcast channel block is less than a third measurement threshold is used for determining the K random access occasions.

As one embodiment, the measurement result for the first synchronization signal/physical broadcast channel block is less than the third measurement threshold, and the K random access occasions in the K0 random access occasions are selected for sending the K first-type sequences.

As one embodiment, the measurement result for the first synchronization signal/physical broadcast channel block is greater than the third measurement threshold, K1 random access occasions in the K0 random access occasions are used for sending the K1 first-type sequences, and K1 is a positive integer not greater than K.

As one embodiment, when the measurement result for the first synchronization signal/physical broadcast channel block is less than the third measurement threshold, the K random access occasions in the K0 random access occasions are used for sending the K first-type sequences; and when the measurement result for the first synchronization signal/physical broadcast channel block is greater than the third measurement threshold, the K1 random access occasions in the K0 random access occasions are used for sending the K1 first-type sequences, and K1 is a positive integer not greater than K.

As one embodiment, the second measurement threshold is configured by one higher layer signaling.

As one embodiment, the second measurement threshold is the L1-RSRP threshold.

As one embodiment, the second measurement threshold is the L1-RSRQ threshold.

As one embodiment, the second measurement threshold is the L1-SINR threshold.

As one embodiment, the third measurement threshold is configured by one higher layer signaling.

As one embodiment, the third measurement threshold is the L1-RSRP threshold.

As one embodiment, the third measurement threshold is the L1-RSRQ threshold.

As one embodiment, the third measurement threshold is the L1-SINR threshold.

### Embodiment 7

Embodiment 7 shows a schematic diagram of relationships between a first signaling and a first random access occasion and between a first spatial filter and a second spatial filter according to one embodiment of the present application, as shown in FIG. 7. In FIG. 7, a rectangle filled with diagonal stripes represents the first signaling, and a rectangle filled with wave points represents a first signal in the present application; squares filled with diagonal grids represents K random access occasions in the present application; and a rectangle filled with square grids represents a second signal in the present application.

In Embodiment 7, the first signaling is used for determining a first identifier, and the first identifier is used for determining the first random access occasion; K spatial filters are in a one-to-one correspondence with the K random access occasions; the first random access occasion is used for determining the first spatial filter from the K spatial filters; and the first spatial filter is used for determining the second spatial filter.

As one embodiment, the first identifier is used for indicating the first random access occasion.

As one embodiment, the first identifier is associated with the first random access occasion.

As one embodiment, the first identifier is related to the first random access occasion.

As one embodiment, the first identifier is related to a time-frequency resource occupied by the first random access occasion.

As one embodiment, the first identifier is used for indicating the time-frequency resource occupied by the first random access occasion.

As one embodiment, the first identifier is used for determining the first random access occasion from the K random access occasions.

As one embodiment, the first identifier is used for determining the first random access occasion from the K0 random access occasions.

As one embodiment, that the first identifier is used for determining the first random access occasion is equivalent to that the first identifier is used for determining the first spatial filter.

As one embodiment, that the first identifier is used for indicating the first random access occasion is equivalent to that the first identifier is used for indicating the first spatial filter.

As one embodiment, K first-type sequences are in a one-to-one correspondence with the K random access occasions.

As one embodiment, the K first-type sequences are in a one-to-one correspondence with the K random access occasions, and the K first-type sequences are different.

As one embodiment, a first sequence is one of the K first-type sequences, and the first sequence corresponds to the first random access occasion.

As one embodiment, the first sequence is transmitted on the first random access occasion.

As one embodiment, the first identifier is an index of the first sequence in a plurality of first-type sequences comprised in the first random access occasion.

As one embodiment, the first identifier is used for indicating the first sequence from the K first-type sequences.

As one embodiment, that the first identifier is used for determining the first random access occasion is equivalent to that the first identifier is used for determining the first sequence.

As one embodiment, that the first identifier is used for indicating the first random access occasion is equivalent to that the first identifier is used for indicating the first sequence.

As one embodiment, that the first identifier is used for determining the first sequence is equivalent to that the first identifier is used for determining the first spatial filter.

As one embodiment, that the first identifier is used for indicating the first sequence is equivalent to that the first identifier is used for indicating the first spatial filter.

As one embodiment, the first identifier is the index of the first random access occasion in the K random access occasions.

As one embodiment, the first identifier is the index of the first random access occasion in the K0 random access occasions.

As one embodiment, the first identifier is one RNTI (Radio Network Temporary Identity).

As one embodiment, the first identifier is an RA-RNTI.

As one embodiment, the first identifier is an MsgB-RNTI.

As one embodiment, the first identifier is an RAPID.

As one embodiment, the first identifier is the same as a second identifier.

As one embodiment, the first identifier is equal to the second identifier.

As one embodiment, the first identifier is related to the second identifier.

As one embodiment, the first identifier is the index of the first sequence.

As one embodiment, the first identifier is a positive integer.

As one embodiment, the first identifier is a positive integer not greater than 8.

As one embodiment, a first symbol index, a first slot index, and a first frequency domain index are related to the first random access occasion.

As one embodiment, the first symbol index, the first slot index, and the first frequency domain index are used for indicating the time-frequency resource occupied by the first random access occasion.

As one embodiment, the first identifier is linearly related to the first symbol index, the first slot index, and the first frequency domain index.

As one embodiment, the first symbol index, the first slot index, the first frequency domain index, and a first uplink carrier index are related to the first random access occasion.

As one embodiment, the first symbol index, the first slot index, the first frequency domain index, and the first uplink carrier index are used for indicating the time-frequency resource occupied by the first random access occasion.

As one embodiment, the first identifier is linear with the first symbol index, the first slot index, and the first frequency domain index and is used with the first uplink carrier index for indicating the time-frequency resource occupied by the first random access occasion.

As one embodiment, the first identifier comprises at least one of the first symbol index, the first slot index, and the first frequency domain index.

As one embodiment, the first identifier comprises at least one of the first symbol index, the first slot index, the first frequency domain index, and the first uplink carrier index.

As one embodiment, the first identifier comprises the first symbol index, the first slot index, and the first frequency domain index.

As one embodiment, the first identifier comprises the first symbol index, the first slot index, the first frequency domain index, and the first uplink carrier index.

As one embodiment, the first symbol index is the index of an initial symbol in symbols occupied by the first random access occasion.

As one embodiment, the first slot index is the index of a slot at which the first random access occasion is located in a plurality of slots comprised in a system frame.

As one embodiment, the first frequency domain index is the index of the first random access occasion in a frequency domain.

As one embodiment, the first frequency domain index is used for indicating a frequency domain resource of the first random access occasion.

As one embodiment, the first uplink carrier index is used for indicating an uplink carrier (UL carrier) at which the first random access occasion is located.

As one embodiment, the first identifier = 1 + the first symbol index + 14 × the first slot index + 14 × 80 × the first frequency domain index + 14 × 80 × 8 × the first uplink carrier index.

As one embodiment, at least one of the first signaling or the first signal is used for determining the first identifier.

As one embodiment, at least the former of the first signaling and the second signal is used for determining the first identifier.

As one embodiment, the first signaling is used for determining the first identifier.

As one embodiment, the first signal is used for determining the first identifier.

As one embodiment, the first signaling and the first signal are jointly used for determining the first identifier.

As one embodiment, the first signaling and the first signal are both used for determining the first identifier.

As one embodiment, the first identifier is used for generating a scrambling sequence of the first signaling.

As one embodiment, the first identifier is used for generating the scrambling sequence of the first signal.

As one embodiment, the first identifier is used for scrambling the first signaling.

As one embodiment, the first identifier is used for scrambling the first signal.

As one embodiment, the first signaling comprises the first identifier.

As one embodiment, the first signal comprises the first identifier.

As one embodiment, the first identifier is one of a plurality of fields comprised in the first signaling.

As one embodiment, the first identifier is one of the plurality of fields comprised in the first signal.

As one embodiment, the first identifier is used for scrambling the first signaling, and the first identifier is one of the plurality of fields comprised in the first signal.

As one embodiment, the first identifier is linearly related to the first symbol index, the first slot index, and the first frequency domain index, and the first identifier is used for generating the scrambling sequence of the first signaling.

As one embodiment, the first symbol index, the first slot index, and the first frequency domain index are jointly used for indicating the first random access occasion, the first identifier is linearly related to the first symbol index, the first slot index, and the first frequency domain index, and the first identifier is used for generating the scrambling sequence of the first signaling.

As one embodiment, the first identifier is linearly related to the first symbol index, the first slot index, the first frequency domain index, and the first uplink carrier index, and the first identifier is used for generating the scrambling sequence of the first signaling.

As one embodiment, the first symbol index, the first slot index, the first frequency domain index, and the first uplink carrier index are jointly used for indicating the first random access occasion, the first identifier is linearly related to the first symbol index, the first slot index, the first frequency domain index, and the first uplink carrier index, and the first identifier is used for generating the scrambling sequence of the first signaling.

As one embodiment, the first identifier is the index of the first random access occasion in the K random access occasions, the first signaling comprises a plurality of fields, and the first identifier is one of the plurality of fields comprised in the first signaling.

As one embodiment, the first identifier is the index of the first random access occasion in the K0 random access occasions, the first signaling comprises a plurality of fields, and the first identifier is one of the plurality of fields comprised in the first signaling.

As one embodiment, the first identifier is the index of the first random access occasion in the K random access occasions, the first signal comprises a plurality of fields, and the first identifier is one of the plurality of fields comprised in the first signal.

As one embodiment, the first identifier is the index of the first random access occasion in the K0 random access occasions, the first signal comprises a plurality of fields, and the first identifier is one of the plurality of fields comprised in the first signal.

As one embodiment, the first identifier comprises the first symbol index, the first slot index, and the first frequency domain index, the first signal comprises a plurality of fields, and the first identifier is one of the plurality of fields comprised in the first signal.

### Embodiment 8

Embodiment 8 shows one structural block diagram of a processing apparatus used in a first node device, as shown in FIG. 8. In Embodiment 8, a first node device processing apparatus 800 is mainly composed of a first receiver 801 and a first transmitter 802.

As one embodiment, the first receiver 801 comprises at least one of an antenna 452, a transmitting device/receiving device 454, a multi-antenna receiving processor 458, a receiving processor 456, a controller/processor 459, a memory 460, and a data source 467 in FIG. 4 of the present application.

As one embodiment, the first transmitter 802 comprises at least one of the antenna 452, the transmitting device/receiving device 454, a multi-antenna transmitting processor 457, a transmitting processor 468, the controller/processor 459, the memory 460, and the data source 467 in FIG. 4 of the present application.

In Embodiment 9, the first transmitter 802 sends K first-type sequences on K random access occasions by respectively using K spatial filters, wherein K is a positive integer greater than 1; the first receiver 801 receives a first signaling and a first signal in a first time window, wherein the first signaling is used for scheduling the first signal, and at least one of the first signaling or the first signal is used for determining a first identifier; and the first transmitter 802 sends a second signal by using a second spatial filter, wherein the first signal carries a second identifier, and the second identifier is used for identifying at least one of the K first-type sequences; the first signal is used for indicating a time-frequency resource occupied by the second signal; the first identifier is used for indicating a first random access occasion, which is one of the K random access occasions; the first random access occasion corresponds to a first spatial filter, which is one of the K spatial filters; and the first spatial filter is used for determining the second spatial filter.

As one embodiment, a first symbol index, a first slot index, and a first frequency domain index are related to the first random access occasion; the first symbol index, the first slot index, and the first frequency domain index are all used for generating the first identifier; and the first identifier is used for scrambling the first signaling.

As one embodiment, the first identifier is used for indicating the first random access occasion from the K random access occasions; and the first signaling comprises a plurality of fields, and the first identifier is one of the plurality of fields comprised in the first signaling.

As one embodiment, the first signal comprises the plurality of fields, and the first identifier is one of the plurality of fields comprised in the first signal.

As one embodiment, the first receiver 801 receives a first synchronization signal/physical broadcast channel block; and a measurement result for the first synchronization signal/physical broadcast channel block is used for determining the K random access occasions, K0 random access occasions are associated with the first synchronization signal/physical broadcast channel block, the K0 random access occasions comprise the K random access occasions, and K0 is a positive integer not less than K.

As one embodiment, the first receiver 801 receives first configuration information, wherein the first configuration information is used for determining an association of a plurality of candidate synchronization signal/physical broadcast channel blocks with a plurality of random access occasions; the first synchronization signal/physical broadcast channel block is one of the plurality of candidate synchronization signal/physical broadcast channel blocks; and a plurality of measurement results respectively for the plurality of candidate synchronization signal/physical broadcast channel blocks are used for determining the first synchronization signal/physical broadcast channel block from the plurality of candidate synchronization signal/physical broadcast channel blocks.

As one embodiment, a first node device 800 is user equipment.

As one embodiment, the first node device 800 is a relay node.

### Embodiment 9

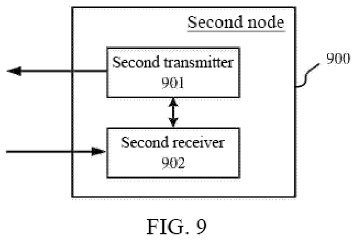

Embodiment 9 shows one structural block diagram of a processing apparatus used in a second node device, as shown in FIG. 9. In FIG. 9, a second node device processing apparatus 900 is mainly composed of a second transmitter 901 and a second receiver 902.

As one embodiment, the second transmitter 901 comprises at least one of an antenna 420, a transmitting device/receiving device 418, a multi-antenna transmitting processor 471, a transmitting processor 416, a controller/processor 475, and a memory 476 in FIG. 4 of the present application.

As one embodiment, the second receiver 902 comprises at least one of the antenna 420, the transmitting device/receiving device 418, a multi-antenna receiving processor 472, a receiving processor 470, the controller/processor 475, and the memory 476 in FIG. 4 of the present application.

In Embodiment 9, the second receiver 902 receives at least one first-type sequence on K0 random access occasions, respectively, wherein K0 is a positive integer greater than 1; the second transmitter 901 sends a first signaling and a first signal in a first time window, wherein the first signaling is used for scheduling the first signal, and at least one of the first signaling or the first signal is used for indicating a first identifier; and the second receiver 902 receives a second signal, wherein the first signal is used for carrying a second identifier, and the second identifier is used for identifying the at least one first-type sequence; the first signal is used for indicating a time-frequency resource occupied by the second signal; the first identifier is used for indicating a first random access occasion, which is one of the K0 random access occasions; the at least one first-type sequence is transmitted by respectively using at least one spatial filter, and the first random access occasion corresponds to a first spatial filter, which is one of the at least one spatial filter; and the first spatial filter is used for determining a second spatial filter, and the second signal is transmitted by using the second spatial filter.

As one embodiment, a first symbol index, a first slot index, and a first frequency domain index are related to the first random access occasion; the first symbol index, the first slot index, and the first frequency domain index are all used for generating the first identifier; and the first identifier is used for scrambling the first signaling.

As one embodiment, the first identifier is used for indicating the first random access occasion from the K0 random access occasions; and the first signaling comprises a plurality of fields, and the first identifier is one of the plurality of fields comprised in the first signaling.

As one embodiment, the first signal comprises the plurality of fields, and the first identifier is one of the plurality of fields comprised in the first signal.

As one embodiment, the second transmitter 901 sends a first synchronization signal/physical broadcast channel block, wherein the K0 random access occasions are associated with the first synchronization signal/physical broadcast channel block.

As one embodiment, the second receiver 902 receives first configuration information, wherein the first configuration information is used for determining an association of a plurality of candidate synchronization signal/physical broadcast channel blocks with a plurality of random access occasions; the first synchronization signal/physical broadcast channel block is one of the plurality of candidate synchronization signal/physical broadcast channel blocks; and a plurality of measurement results respectively for the plurality of candidate synchronization signal/physical broadcast channel blocks are used for determining the first synchronization signal/physical broadcast channel block from the plurality of candidate synchronization signal/physical broadcast channel blocks.

As one embodiment, a second node device 900 is a base station.

As one embodiment, the second node device 900 is a relay node.

As one embodiment, the second node device 900 is user equipment.

Those of ordinary skill in the art may understand that all or part of the steps in the above method may be completed by instructing related hardware through a program, and the program may be stored in a computer-readable storage medium, such as a read-only memory, a hard disk, or an optical disc. Optionally, all or part of the steps in the above embodiments may also be implemented by using one or more integrated circuits. Accordingly, various module units in the above embodiments may be implemented in a form of hardware or in a form of a software functional module. The present application is not limited to any specific form of combination of software and hardware. A first node device in the present application includes but is not limited to a mobile phone, a tablet computer, a laptop, a network card, a low-power device, an eMTC device, an NB-IoT device, a vehicular communication device, an aircraft, an airplane, an unmanned aerial vehicle, a remote-controlled aircraft, and other wireless communication devices. The second node device in the present application includes but is not limited to the mobile phone, the tablet computer, the laptop, the network card, the low-power device, the eMTC device, the NB-IoT device, the vehicular communication device, the aircraft, the airplane, the unmanned aerial vehicle, the remote-controlled aircraft, and other wireless communication devices. The user equipment or UE or terminal in the present application includes but is not limited to the mobile phone, the tablet computer, the laptop, the network card, the low-power device, the eMTC device, the NB-IoT device, the vehicular communication device, the aircraft, the airplane, the unmanned aerial vehicle, the remote-controlled aircraft, and other wireless communication devices. The base station device or base station or network-side device in the present application includes but is not limited to a macro cellular base station, a micro cellular base station, a Femtocell, a relay base station, an eNB, a gNB, a transmitter receiver point (TRP), a GNSS, a relay satellite, a satellite base station, an air base station, and other wireless communication devices.

The foregoing descriptions are merely preferred embodiments of the present application and are not intended to limit the protection scope of the present application. Any modification, equivalent replacement, improvement, or the like made without departing from the spirit and principle of the present application shall fall within the protection scope of the present application.

## Claims

1. A first node for wireless communication, comprising:
a first transmitter, sending K first-type sequences on K random access occasions by respectively using K spatial filters, wherein K is a positive integer greater than 1;
a first receiver, receiving a first signaling and a first signal in a first time window, wherein the first signaling is used for scheduling the first signal, and at least one of the first signaling or the first signal is used for determining a first identifier; and
the first transmitter, sending a second signal by using a second spatial filter,
wherein the first signal carries a second identifier, and the second identifier is used for identifying at least one of the K first-type sequences; the first signal is used for indicating a time-frequency resource occupied by the second signal; the first identifier is used for indicating a first random access occasion, which is one of the K random access occasions; the first random access occasion corresponds to a first spatial filter, which is one of the K spatial filters; and the first spatial filter is used for determining the second spatial filter.

2. The first node according to claim 1, wherein a first symbol index, a first slot index, and a first frequency domain index are related to the first random access occasion; the first symbol index, the first slot index, and the first frequency domain index are all used for generating the first identifier; and the first identifier is used for scrambling the first signaling.

3. The first node according to claim 1, wherein the first identifier is used for indicating the first random access occasion from the K random access occasions; and the first signaling comprises a plurality of fields, and the first identifier is one of the plurality of fields comprised in the first signaling.

4. The first node according to any one of claims 1 to 3, wherein the first signal comprises a plurality of fields, and the first identifier is one of the plurality of fields comprised in the first signal.

5. The first node according to any one of claims 1 to 4, comprising:
the first receiver, receiving a first synchronization signal/physical broadcast channel block,
wherein a measurement result for the first synchronization signal/physical broadcast channel block is used for determining the K random access occasions, K0 random access occasions are associated with the first synchronization signal/physical broadcast channel block, the K0 random access occasions comprise the K random access occasions, and K0 is a positive integer not less than K.

6. The first node according to any one of claims 1 to 5, comprising:
the first receiver, receiving first configuration information,
wherein the first configuration information is used for determining an association of a plurality of candidate synchronization signal/physical broadcast channel blocks with a plurality of random access occasions; the first synchronization signal/physical broadcast channel block is one of the plurality of candidate synchronization signal/physical broadcast channel blocks; and a plurality of measurement results respectively for the plurality of candidate synchronization signal/physical broadcast channel blocks are used for determining the first synchronization signal/physical broadcast channel block from the plurality of candidate synchronization signal/physical broadcast channel blocks.

7. A second node for wireless communication, comprising:
a second receiver, receiving at least one first-type sequence on K0 random access occasions, respectively, wherein K0 is a positive integer greater than 1;
a second transmitter, sending a first signaling and a first signal in a first time window, wherein the first signaling is used for scheduling the first signal, and at least one of the first signaling or the first signal is used for indicating a first identifier; and
the second receiver, receiving a second signal,
wherein the first signal is used for carrying a second identifier, and the second identifier is used for identifying the at least one first-type sequence; the first signal is used for indicating a time-frequency resource occupied by the second signal; the first identifier is used for indicating a first random access occasion, which is one of the K0 random access occasions; the at least one first-type sequence is transmitted by respectively using at least one spatial filter, and the first random access occasion corresponds to a first spatial filter, which is one of the at least one spatial filter; and the first spatial filter is used for determining a second spatial filter, and the second signal is transmitted by using the second spatial filter.

8. The second node according to claim 7, wherein a first symbol index, a first slot index, and a first frequency domain index are related to the first random access occasion; the first symbol index, the first slot index, and the first frequency domain index are all used for generating the first identifier; and the first identifier is used for scrambling the first signaling; or the first identifier is used for indicating the first random access occasion from the K random access occasions; and the first signaling comprises a plurality of fields, and the first identifier is one of the plurality of fields comprised in the first signaling; or the first signal comprises a plurality of fields, and the first identifier is one of the plurality of fields comprised in the first signal.

9. The second node according to any one of claims 7 to 9, comprising: the second transmitter, sending a first synchronization signal/physical broadcast channel block, wherein the K0 random access occasions are associated with the first synchronization signal/physical broadcast channel block.

10. The second node according to any one of claims 7 to 9, comprising: the second receiver, receiving first configuration information, wherein the first configuration information is used for determining an association of a plurality of candidate synchronization signal/physical broadcast channel blocks with a plurality of random access occasions; the first synchronization signal/physical broadcast channel block is one of the plurality of candidate synchronization signal/physical broadcast channel blocks; and a plurality of measurement results respectively for the plurality of candidate synchronization signal/physical broadcast channel blocks are used for determining the first synchronization signal/physical broadcast channel block from the plurality of candidate synchronization signal/physical broadcast channel blocks.

11. A method used in a first node for wireless communication, comprising:
sending K first-type sequences on K random access occasions by respectively using K spatial filters, wherein K is a positive integer greater than 1;
receiving a first signaling and a first signal in a first time window, wherein the first signaling is used for scheduling the first signal, and at least one of the first signaling or the first signal is used for determining a first identifier; and
sending a second signal by using a second spatial filter,
wherein the first signal carries a second identifier, and the second identifier is used for identifying at least one of the K first-type sequences; the first signal is used for indicating a time-frequency resource occupied by the second signal; the first identifier is used for indicating a first random access occasion, which is one of the K random access occasions; the first random access occasion corresponds to a first spatial filter, which is one of the K spatial filters; and the first spatial filter is used for determining the second spatial filter.

12. The method used in a first node according to claim 11, wherein a first symbol index, a first slot index, and a first frequency domain index are related to the first random access occasion; the first symbol index, the first slot index, and the first frequency domain index are all used for generating the first identifier; and the first identifier is used for scrambling the first signaling.

13. The method used in a first node according to claim 11, wherein the first identifier is used for indicating the first random access occasion from the K random access occasions; and the first signaling comprises a plurality of fields, and the first identifier is one of the plurality of fields comprised in the first signaling.

14. The method used in a first node according to any one of claims 11 to 13, wherein the first signal comprises a plurality of fields, and the first identifier is one of the plurality of fields comprised in the first signal.

15. The method used in a first node according to any one of claims 12 to 14, comprising: receiving a first synchronization signal/physical broadcast channel block, wherein a measurement result for the first synchronization signal/physical broadcast channel block is used for determining the K random access occasions, K0 random access occasions are associated with the first synchronization signal/physical broadcast channel block, the K0 random access occasions comprise the K random access occasions, and K0 is a positive integer not less than K.

16. The method used in a first node according to any one of claims 12 to 15, comprising: receiving first configuration information, wherein the first configuration information is used for determining an association of a plurality of candidate synchronization signal/physical broadcast channel blocks with a plurality of random access occasions; the first synchronization signal/physical broadcast channel block is one of the plurality of candidate synchronization signal/physical broadcast channel blocks; and a plurality of measurement results respectively for the plurality of candidate synchronization signal/physical broadcast channel blocks are used for determining the first synchronization signal/physical broadcast channel block from the plurality of candidate synchronization signal/physical broadcast channel blocks.

17. A method used in a second node for wireless communication, comprising:
receiving at least one first-type sequence on K0 random access occasions, respectively, wherein K0 is a positive integer greater than 1;
sending a first signaling and a first signal in a first time window, wherein the first signaling is used for scheduling the first signal, and at least one of the first signaling or the first signal is used for indicating a first identifier; and
receiving a second signal,
wherein the first signal is used for carrying a second identifier, and the second identifier is used for identifying the at least one first-type sequence; the first signal is used for indicating a time-frequency resource occupied by the second signal; the first identifier is used for indicating a first random access occasion, which is one of the K0 random access occasions; the at least one first-type sequence is transmitted by respectively using at least one spatial filter, and the first random access occasion corresponds to a first spatial filter, which is one of the at least one spatial filter; and the first spatial filter is used for determining a second spatial filter, and the second signal is transmitted by using the second spatial filter.

18. The method used in a second node according to claim 17, wherein a first symbol index, a first slot index, and a first frequency domain index are related to the first random access occasion; the first symbol index, the first slot index, and the first frequency domain index are all used for generating the first identifier; and the first identifier is used for scrambling the first signaling; or the first identifier is used for indicating the first random access occasion from the K0 random access occasions; and the first signaling comprises a plurality of fields, and the first identifier is one of the plurality of fields comprised in the first signaling; or the first signal comprises a plurality of fields, and the first identifier is one of the plurality of fields comprised in the first signal.

19. The method used in a second node according to any one of claims 17 and 18, comprising: sending a first synchronization signal/physical broadcast channel block, wherein the K0 random access occasions are associated with the first synchronization signal/physical broadcast channel block.

20. The method used in a second node according to any one of claims 17 to 19, comprising: receiving first configuration information, wherein the first configuration information is used for determining an association of a plurality of candidate synchronization signal/physical broadcast channel blocks with a plurality of random access occasions; the first synchronization signal/physical broadcast channel block is one of the plurality of candidate synchronization signal/physical broadcast channel blocks; and a plurality of measurement results respectively for the plurality of candidate synchronization signal/physical broadcast channel blocks are used for determining the first synchronization signal/physical broadcast channel block from the plurality of candidate synchronization signal/physical broadcast channel blocks.
